# EUROPÄISCHE PATENTSCHRIFT

(11) **EP 3 498 919 B1**
(45) Veröffentlichungstag und Bekanntmachung des Hinweises auf die Patenterteilung: **02.02.2022**
(21) Anmeldenummer: 18211455.3
(22) Anmeldetag: 11.12.2018
(51) Int. Cl.: E01C 23/12, E01C 19/26

(54) **BODENBEARBEITUNGSWALZE**
SOIL WORKING ROLLER
ROULEAU DE TRAITEMENT DU SOL

(30) Priorität: 14.12.2017 DE 102017129932
(43) Veröffentlichungstag der Anmeldung: 19.06.2019
(60) Teilanmeldung: 21213004.1
(73) Patentinhaber: Hamm AG, 95643 Tirschenreuth (DE)
(72) Erfinder: MEIER, Matthias, 95643 Tirschenreuth (DE)
(74) Vertreter: Ruttensperger Lachnit Trossin Gomoll

(56) Entgegenhaltungen:
- WO-A1-00/78121
- AU-A1- 2016 201 595
- US-A- 2 754 734
- US-A- 2 811 912
- US-A- 5 826 808
- US-A1- 2009 137 373
- US-A1- 2010 135 724
- US-A1- 2013 062 084

## Beschreibung

Die vorliegende Erfindung betrifft eine Bodenbearbeitungswalze, welche insbesondere dazu eingesetzt werden kann, einen festen Untergrund, wie zum Beispiel einen Betonuntergrund, zu zerbrechen. Derartige Bodenbearbeitungswalzen werden allgemein auch als Brecherwalzen bezeichnet.

Aus der US 4,523,873 ist eine selbstfahrende Bodenbearbeitungsmaschine mit einer als Brecherwalze ausgebildeten Bodenbearbeitungswalze bekannt. Die Bodenbearbeitungswalze dieser bekannten Bodenbearbeitungsmaschine umfasst einen zylindrischen Walzenmantel, der über eine im Inneren des Walzenmantels vorgesehene Trägerstruktur an einem Maschinenrahmen um eine Walzendrehachse drehbar getragen ist. An der Außenumfangsfläche des Walzenmantels sind mehrere Reihen von in Zick-Zack-Muster in Umfangsrichtung verlaufenden Bodenbearbeitungsvorsprüngen vorgesehen.

Die DE 10 2013 208 261 A1 offenbart eine Bodenbearbeitungswalze, bei welcher am Außenumfang eines im Wesentlichen zylindrischen Walzenmantels diesen ringartig umgebende und über den Außenumfang des Walzenmantels hervorstehende Bodenbearbeitungsvorsprünge vorgesehen sind.

Die EP 3 031 526 B1 offenbart einen in einer Prallmühle einsetzbaren Rotor zur Zerkleinerung von Gestein. Der Rotor weist an seinen beiden axialen Endbereichen näherungsweise quadratische Trägerscheiben auf, zwischen welchen zum Zerkleinern des Gesteins vorgesehene Schlagleisten sich nach radial außen hervorstehend erstrecken.

Eine Bodenbearbeitungswalze gemäß dem Oberbegriff des Anspruchs 1 ist aus der US 2013/062084 A1 bekannt.

Es ist die Aufgabe der vorliegenden Erfindung, eine Bodenbearbeitungswalze für eine Bodenbearbeitungsmaschine vorzusehen, welche bei konstruktiv einfachem Aufbau eine verbesserte Effizienz für die Bodenbearbeitung bereitstellt.

Erfindungsgemäß wird diese Aufgabe gelöst durch eine Bodenbearbeitungswalze gemäß Anspruch 1. Diese umfasst eine Trägerstruktur, wobei zum Bilden eines um eine Walzendrehachse drehbaren Walzenkörpers an einem radial äußeren Bereich der Trägerstruktur eine Mehrzahl von im Wesentlichen in Richtung der Walzendrehachse sich erstreckenden ersten Bodenbearbeitungseinheiten vorgesehen ist.

Zum Erhalt eines variablen und bei Verschleiß leicht überholbaren Aufbaus ist vorgesehen, dass wenigstens eine erste Bodenbearbeitungseinheit einen mit wenigstens einem Teil der Trägerscheiben durch Verschweißen fest verbundenen, wannenartig ausgebildeten Werkzeugträger mit bezüglich des Außenumfangs des Walzenkörpers konkaver Kontur umfasst, und dass mit wenigstens einem Werkzeugträger ein Bodenbearbeitungswerkzeug lösbar verbunden oder verbindbar ist. Da bei diesem Aufbau die zum Bearbeiten des Bodens eingesetzten Werkzeuge grundsätzlich lösbar mit einem jeweiligen Werkzeugträger verbunden sind, können einerseits leicht verschiedene Werkzeuge an den Walzenkörper angebaut werden. Andererseits können verschlissene Werkzeuge leicht gegen neue Werkzeuge ausgetauscht werden.

Die erfindungsgemäß aufgebaute Bodenbearbeitungswalze umfasst, anders als aus dem Stand der Technik bekannte Bodenbearbeitungswalzen, am Außenumfang keinen die Bodenbearbeitungsbalken nach radial außen im Wesentlichen abschließenden Walzenmantel. Durch den Aufbau des Walzenkörpers mit einer Trägerstruktur mit einer Mehrzahl von Trägerscheiben oder Trägerstreben und den daran vorgesehenen Bodenbearbeitungseinheiten wird eine skelettartige, grundsätzlich nach radial außen offene Struktur des Walzenkörpers erreicht. Diese Struktur ist in sich grundsätzlich sehr steif, so dass sie dazu in der Lage ist, das insbesondere zum Zerkleinern von Untergrund, wie zum Beispiel Betonmaterial, erforderliche hohe Aufstandsgewicht einer Bodenbearbeitungsmaschine zu tragen, andererseits selbst aber eine vergleichsweise geringe Masse aufweist. Dies ist insbesondere dann von wesentlichem Vorteil, wenn einer derartigen Bodenbearbeitungswalze ein Schwingungserzeugungsmechanismus zugeordnet ist, durch welchen die Bodenbearbeitungswalze zum verbesserten Zerkleinern des Untergrunds in Schwingung versetzt werden kann.

Hierbei ist insbesondere vorgesehen, dass der Walzenkörper im Außenumfangsbereich der Trägerscheiben nach radial außen im Wesentlichen offen ausgebildet ist, Wie bereits angeführt, ist eine Mehrzahl in Richtung einer Walzendrehachse aufeinanderfolgend angeordneter, zum Bilden des Walzenkörpers miteinander verbundener Trägerscheiben vorgesehen, wobei an einem Außenumfangsbereich wenigstens eines Teils der Trägerscheiben die Mehrzahl von im Wesentlichen in Richtung der Walzendrehachse sich erstreckenden ersten Bodenbearbeitungseinheiten vorgesehen ist und optional an einem Außenumfangsbereich wenigstens eines Teils der Trägerscheiben eine Mehrzahl von im Wesentlichen in Umfangsrichtung sich erstreckenden zweiten Bodenbearbeitungseinheiten vorgesehen ist.

Zum Unterstützen einer Abrollbewegung können die Trägerscheiben mit im Wesentlichen kreisartiger Außenumfangskontur ausgebildet sein. Ferner kann wenigstens ein Teil der Trägerschreiben eine Mehrzahl von in Umfangsabstand zueinander angeordneten Trägerscheibensegmenten umfassen. Auch dies trägt zu einer verringerten Gesamtmasse des Walzenkörpers bei.

Bei einer alternativen Ausgestaltungsart mit einer ebenfalls zu einer geringen Masse des Walzenkörpers beitragenden Struktur kann die Trägerstruktur eine Mehrzahl von im Wesentlichen in Umfangsrichtung sich erstreckenden zweiten Bodenbearbeitungseinheiten tragenden Trägerstreben umfassen.

Die Trägerstruktur, beispielsweise wenigstens ein Teil der Trägerscheiben, kann eine Umfangswandung eines Gehäuses für einen Schwingungserzeugungsmechanismus umgebend angeordnet sein.

Für einen kompakten, stabilen Aufbau wird vorgeschlagen, dass die die Umfangswandung umgebend angeordneten Trägerscheiben mit der Umfangswandung fest verbunden sind, oder/und dass in wenigstens einem axialen Endbereich des Walzenkörpers wenigstens eine Trägerscheibe mit den die Umfangswandung umgebend angeordneten Trägerscheiben durch wenigstens einen Teil der ersten Bodenbearbeitungseinheiten verbunden ist, wobei in vorteilhafter Weise vorgesehen sein kann, dass die die Umfangswandung umgebend angeordneten Trägerscheiben mit der Umfangswandung durch Verschweißung fest verbunden sind

Zur Erzeugung einer einer Abrollbewegung der Bodenverarbeitungswalze überlagerten Schwingungsbewegung, beispielsweise Vibration, also eine Schwingung im Wesentlichen orthogonal zur Walzendrehachse, wird vorgeschlagen, dass in dem Gehäuse ein Schwingungserzeugungsmechanismus mit wenigstens einer um eine Unwuchtdrehachse drehbaren Unwuchtmasse angeordnet ist, oder/und dass in wenigstens einem axialen Endbereich das Gehäuse durch eine Stirnwand abgeschlossen ist, wobei vorzugsweise die Unwuchtdrehachse im Wesentlichen der Walzendrehachse entspricht oder/und ein der wenigstens einen Unwuchtmasse zugeordneter Unwuchtantriebsmotor an einer Stirnwand getragen ist.

Ein einfach herzustellender, besonders stabiler Aufbau kann erreicht werden, wenn wenigstens eine erste Bodenbearbeitungseinheit einen der Trägerstruktur, beispielsweise mit wenigstens einem Teil der Trägerscheiben, fest verbundenen Bodenbearbeitungsbalken umfasst. Da erfindungsgemäß am Außenumfangsbereich der Trägerstruktur, beispielsweise der Trägerscheiben, der Walzenkörper keinen Walzenmantel umfasst, können die ersten Bodenbearbeitungseinheiten bzw. in diesem Ausgestaltungsbeispiel die Bodenbearbeitungsbalken derselben direkt an der Trägerstruktur offenen, beispielsweise skelettartig ausgebildeten angebracht werden.

Vorteilhafterweise kann dabei vorgesehen sein, dass eine Mehrzahl von Bodenbearbeitungsbalken mit Umfangsabstand zueinander angeordnet ist.

Sofern die Trägerstruktur Trägerscheiben umfasst, kann der wenigstens eine Bodenbearbeitungsbalken mit allen Trägerscheiben fest verbunden sein, oder/und kann der wenigstens eine Bodenbearbeitungsbalken mit wenigstens einem Teil der Trägerscheiben durch Verschweißung fest verbunden sein,

Vorteilhafterweise kann dabei vorgesehen sein, dass jede erste Bodenbearbeitungseinheit einen Werkzeugträger umfasst, oder/und dass eine Mehrzahl von Werkzeugträgern mit Umfangsabstand zueinander angeordnet ist.

Bei Ausgestaltung der Trägerstruktur mit Trägerscheiben kann der wenigstens eine Werkzeugträger mit jeder Trägerscheibe fest verbunden sein.

Beispielsweise kann wenigstens ein Bodenbearbeitungswerkzeug als Bodenbearbeitungsbalken ausgebildet sein. Ein derartiger Bodenbearbeitungsbalken erstreckt sich dann im Wesentlichen parallel zur Walzendrehachse und kann dann, wenn dieser im Verlaufe der Rotation und dabei der Voranbewegung der Bodenbearbeitungswalze auf den zu bearbeitenden Untergrund auftrifft, durch die dabei in den Untergrund schlagartig eingeleiteten Kräfte eine Zerkleinerung des Untergrunds herbeiführen.

Für eine stabile Anbindung eines Bodenbearbeitungsbalkens an einen jeweiligen Werkzeugträger wird vorgeschlagen, dass der Bodenbearbeitungsbalken einen zur Festlegung an einem Werkzeugträger ausgebildeten Sockelbereich und einen von dem Sockelbereich bei an einem Werkzeugträger angebrachtem Bodenbearbeitungswerkzeug nach radial außen hervorstehenden Bodenbearbeitungsbereich umfasst.

Eine stabile, gleichwohl leicht zu lösende Verbindung kann dadurch erreicht werden, dass wenigstens ein Bodenbearbeitungswerkzeug mit seinem Sockelbereich durch Verschraubung oder/und Verklemmung mit einem Werkzeugträger verbunden oder verbindbar ist.

Bei einer weiteren Ausgestaltung kann wenigstens ein Bodenbearbeitungswerkzeug eine mit wenigstens zwei Werkzeugträgern verbundene oder verbindbare, die Trägerstruktur, beispielsweise wenigstens einen Teil von gegebenenfalls die Trägerstruktur bildenden Trägerscheiben, radial außen in einem Umfangsbereich umgebend positionierte oder positionierbare Bodenbearbeitungsschale umfassen. Um dabei eine geschlossene, leicht zu realisierende Struktur der Bodenbearbeitungswalze zu erreichen, wird vorgeschlagen, dass eine Mehrzahl von Bodenbearbeitungsschalen in Umfangsrichtung aufeinanderfolgend jeweils in beiden Umfangsendbereichen mit einem Werkzeugträger verbunden oder verbindbar ist.

Es kann vorgesehen sein, dass wenigstens eine Bodenbearbeitungsschale alle Trägerscheiben radial außen in einem Umfangsbereich umgebend positioniert oder positionierbar ist.

Ferner kann wenigstens eine Bodenbearbeitungsschale mit den wenigstens zwei Werkzeugträgern durch Verschraubung verbunden oder verbindbar sein.

Während eine derartige Bodenbearbeitungsschale an ihrem Außenumfang grundsätzlich im Wesentlichen glatt ausgebildet sein kann, so dass eine damit aufgebaute Bodenbearbeitungswalze grundsätzlich auch als Verdichterwalze eines Bodenverdichters eingesetzt werden kann, kann grundsätzlich auch vorgesehen sein, dass an wenigstens einer Bodenbearbeitungsschale wenigstens ein Walzenwerkzeug getragen ist. Somit wird es insbesondere möglich, auch in axialen Bereichen zwischen beispielsweise zwei Trägerscheiben der Trägerstruktur ein oder mehrere Walzenwerkzeuge vorzusehen.

Bei einer hinsichtlich des Gewichts vorteilhaften Ausgestaltung kann wenigstens eine Bodenbearbeitungsschale mit gitterartiger Struktur ausgebildet sein.

Beispielsweise kann vorgesehen sein, dass an jeder Bodenbearbeitungsschale wenigstens ein Walzenwerkzeug getragen ist, oder/und dass an wenigstens einer Bodenbearbeitungsschale eine Mehrzahl von Walzenwerkzeugen getragen ist, oder/und dass mit wenigstens einer Bodenbearbeitungsschale wenigstens ein Wechselhalter fest verbunden ist und mit dem wenigstens einen Wechselhalter wenigstens ein Walzenwerkzeug lösbar verbunden oder verbindbar ist.

Wenigstens ein, vorzugsweise jedes Walzenwerkzeug kann einen Meißel umfassen. Auch kann wenigstens ein, vorzugsweise jedes Walzenwerkzeug einen Stampffuß umfassen.

Für eine stabile Anbindung der Bodenbearbeitungsschalen an die am Außenumfang der Trägerscheiben vorgesehenen Werkzeugträger wird vorgeschlagen, dass wenigstens eine Bodenbearbeitungsschale in wenigstens einem Umfangsendbereich einen an eine konkave Kontur eines Werkzeugträgers angepassten Werkzeugträger-Eingriffsbereich aufweist.

Ferner kann an dem radial äußeren Bereich der Trägerstruktur eine Mehrzahl von im Wesentlichen in Umfangsrichtung sich erstreckenden zweiten Bodenbearbeitungseinheiten vorgesehen sein.

Wenigstens eine zweite Bodenbearbeitungseinheit kann an der Trägerstruktur, beispielsweise wenigstens einer Trägerscheibe, zwischen wenigstens zwei in Umfangsrichtung aufeinanderfolgenden ersten Bodenbearbeitungseinheiten wenigstens einen nach radial außen hervorstehenden Bodenbearbeitungsvorsprung umfassen. Auch hier ist eine direkte Anbindung der zweiten Bodenbearbeitungseinheiten an die Trägerscheiben vorgesehen.

Insbesondere kann dabei vorgesehen sein, dass an jeder Trägerscheibe oder einer oder mehreren vergleichbaren Komponenten der Trägerstruktur wenigstens eine zweite Bodenbearbeitungseinheit wenigstens einen Bodenbearbeitungsvorsprung umfasst.

Ferner kann vorgesehen sein, dass bei wenigstens einer zweiten Bodenbearbeitungseinheit der wenigstens eine Bodenbearbeitungsvorsprung einen Umfangsabstand zu den diese zweite Bodenbearbeitungseinheit in Umfangsrichtung zwischen sich aufnehmenden ersten Bodenbearbeitungseinheiten aufweist.

Für einen insbesondere zum Zerkleinern von festem Untergrund vorteilhaften Aufbau wird vorgeschlagen, dass bei wenigstens einer Trägerscheibe zwischen wenigstens zwei in Umfangsrichtung aufeinanderfolgenden ersten Bodenbearbeitungseinheiten keine zweite Bodenbearbeitungseinheit vorgesehen ist. Dabei kann weiter vorgesehen sein, dass bei wenigstens einer Trägerscheibe alternierend zwischen in Umfangsrichtung aufeinanderfolgenden ersten Bodenbearbeitungseinheiten eine zweite Bodenbearbeitungseinheit vorgesehen und keine zweite Bodenbearbeitungseinheit vorgesehen ist, oder/und dass bei in Richtung der Walzendrehachse aufeinanderfolgenden Trägerscheiben zwischen in Umfangsrichtung aufeinanderfolgenden ersten Bodenbearbeitungseinheiten an einer der Trägerscheiben eine zweite Bodenbearbeitungseinheit vorgesehen ist und an der anderen Trägerscheibe keine zweite Bodenbearbeitungseinheit vorgesehen ist.

Ein besonders stabiler, leicht zu realisierender Aufbau kann erreicht werden, wenn bei wenigstens einer zweiten Bodenbearbeitungseinheit wenigstens ein Bodenbearbeitungsvorsprung einen integralen Bestandteil einer Trägerscheibe bildet. Das Anbringen separater Bauteile ist somit nicht erforderlich.

Für einen an verschiedene Arbeitsumgebungen leicht anpassbaren Aufbau wird vorgeschlagen, dass wenigstens eine zweite Bodenbearbeitungseinheit wenigstens einen mit einer Trägerscheibe oder einer oder mehreren vergleichbaren Komponenten der Trägerstruktur lösbar verbundenen oder verbindbaren Bodenbearbeitungsvorsprung-Träger umfasst.

Dies kann beispielsweise dadurch realisiert werden, dass wenigstens eine zweite Bodenbearbeitungseinheit an einem Außenumfangsbereich einer Trägerscheibe oder einer oder mehreren vergleichbaren Komponenten der Trägerstruktur einen Bodenbearbeitungsvorsprung-Tragebereich umfasst, und dass ein Bodenbearbeitungsvorsprung-Träger in dem Bodenbearbeitungsvorsprung-Tragebereich mit dieser Trägerscheibe durch Verschraubung verbunden oder verbindbar ist.

Die vorliegende Erfindung betrifft ferner eine Bodenbearbeitungsmaschine, umfassend wenigstens eine an einem Maschinenrahmen um die Walzendrehachse drehbar getragene, erfindungsgemäß aufgebaute Bodenbearbeitungswalze.

Eine derartige Bodenbearbeitungsmaschine kann als Anhänge-Maschine ausgebildet sein, die keinen Fahrantrieb aufweist. Eine solche Bodenbearbeitungsmaschine kann dann durch eine Zugmaschine, beispielsweise einen Traktor, eine Planierraupe oder einen Bodenverdichter oder dergleichen, über den zu bearbeitenden Untergrund gezogen oder geschoben werden.

Insbesondere dann, wenn einer Bodenbearbeitungswalze einer derartigen Bodenbearbeitungsmaschine ein Schwingungserzeugungsmechanismus zugeordnet ist, kann vorgesehen sein, dass die Bodenbearbeitungsmaschine zum Bereitstellen der Antriebsenergie für einen in der wenigstens einen Bodenbearbeitungswalze vorgesehenen Schwingungserzeugungsmechanismus mit einer Antriebsmaschine hydraulisch oder/und mechanisch zu koppeln ist. Eine mechanische Ankopplung kann beispielsweise durch die mechanische Ankopplung des Schwingungserzeugungsmechanismus an eine Nebenabtriebswelle eines Antriebsaggregats der Antriebsmaschine erfolgen. Eine hydraulische Kopplung kann durch das Anschließen an den Hydraulikkreislauf einer derartigen Antriebsmaschine erfolgen.

Bei einer alternativen Ausgestaltung kann an einer ohne eigenen Fahrantrieb aufgebauten Bodenbearbeitungsmaschine ein Antriebsaggregat zum Bereitstellen der Antriebsenergie für einen in der wenigstens einen Bodenbearbeitungswalze vorgesehenen Schwingungserzeugungsmechanismus vorgesehen sein.

Die Bodenbearbeitungsmaschine kann alternativ selbstfahrend ausgebildet sein und einen Fahrantrieb aufweisen.

Bei derartiger Ausgestaltung kann ein Antriebsaggregat des Fahrantriebs zum Bereitstellen der Antriebsenergie für einen in der wenigstens einen Bodenbearbeitungswalze vorgesehenen Schwingungserzeugungsmechanismus vorgesehen sein. Ferner kann an der Bodenbearbeitungsmaschine ein Antriebsaggregat für den Fahrantrieb und ein von dem Antriebsaggregat für den Fahrantrieb getrennt ausgebildetes Antriebsaggregat für den Schwingungserzeugungsmechanismus der wenigstens einen Bodenbearbeitungswalze vorgesehen sein.

Die vorliegende Erfindung wird nachfolgend mit Bezug auf die beiliegenden Figuren detailliert beschrieben. Es zeigt:
- Fig.1: eine nicht erfindungsgemäße Ausgestaltung einer Bodenbearbeitungswalze in perspektivischer Ansicht;
- Fig. 2: die Bodenbearbeitungswalze der Fig.1 in axialer Ansicht;
- Fig. 3: die Bodenbearbeitungswalze der Fig. 1 in radialer Ansicht;
- Fig. 4: eine der Fig.1 entsprechende perspektivische Ansicht einer erfindungsgemäß aufgebauten Bodenbearbeitungswalze;
- Fig.5: die Bodenbearbeitungswalze der Fig.4 in axialer Ansicht;
- Fig. 6: eine Längsschnittansicht der Bodenbearbeitungswalze der Fig. 5, geschnitten längs einer Linie VI-VI in Fig. 5;
- Fig. 7: eine radiale Ansicht der Bodenbearbeitungswalze der Fig. 5 mit daran angebrachten Bodenbearbeitungswerkzeugen;
- Fig.8: eine axiale Ansicht der Bodenbearbeitungswalze der Fig. 7;
- Fig.9: eine perspektivische Ansicht der Bodenbearbeitungswalze der Fig. 7;
- Fig.10: eine Teil-Axialansicht der Bodenbearbeitungswalze der Fig. 7 mit teilweise davon losgelösten Bodenbearbeitungswerkzeugen;
- Fig. 11: eine auf einem zu bearbeitenden Untergrund abrollende, erfindungsgemäß aufgebaute Bodenbearbeitungswalze;
- Fig. 12: eine perspektivische Ansicht einer erfindungsgemäß aufgebauten Bodenbearbeitungswalze mit am Außenumfang eines Walzenkörpers vorgesehenen Bodenbearbeitungsschalen mit an Wechselhaltern getragenen Walzenwerkzeugen;
- Fig. 13: eine Teil-Axialansicht der Bodenbearbeitungswalze der Fig. 12 mit einer davon losgelösten Bodenbearbeitungsschale;
- Fig. 14: eine perspektivische Ansicht einer erfindungsgemäß aufgebauten Bodenbearbeitungswalze mit am Außenumfang eines Walzenkörpers vorgesehenen Bodenbearbeitungsschalen;
- Fig. 15: eine Teil-Axialansicht der Bodenbearbeitungswalze der Fig. 14 mit einer davon losgelösten Bodenbearbeitungsschale;
- Fig. 16: eine perspektivische Teil-Ansicht einer nicht gemäß den Prinzipien der Erfindung ausgestalteten Bodenbearbeitungswalze;
- Fig. 17: eine der Fig. 16 entsprechende Darstellung einer weiteren nicht erfindungsgemäß ausgestalteten Bodenbearbeitungswalze;
- Fig. 18: eine selbstfahrende Bodenbearbeitungsmaschine mit einer erfindungsgemäßen Bodenbearbeitungswalze gemäß Fig. 9;
- Fig. 19: ein Antriebssystem für den Schwingungserzeugungsmechanismus der Bodenbearbeitungswalze der Bodenbearbeitungsmaschine der Fig. 18;
- Fig. 20: eine Anhänge-Bodenbearbeitungsmaschine mit einer erfindungsgemäßen Bodenbearbeitungswalze gemäß Fig. 9;
- Fig. 21: ein Antriebssystem für den Schwingungserzeugungsmechanismus der Bodenbearbeitungswalze der Bodenbearbeitungsmaschine der Fig. 18.

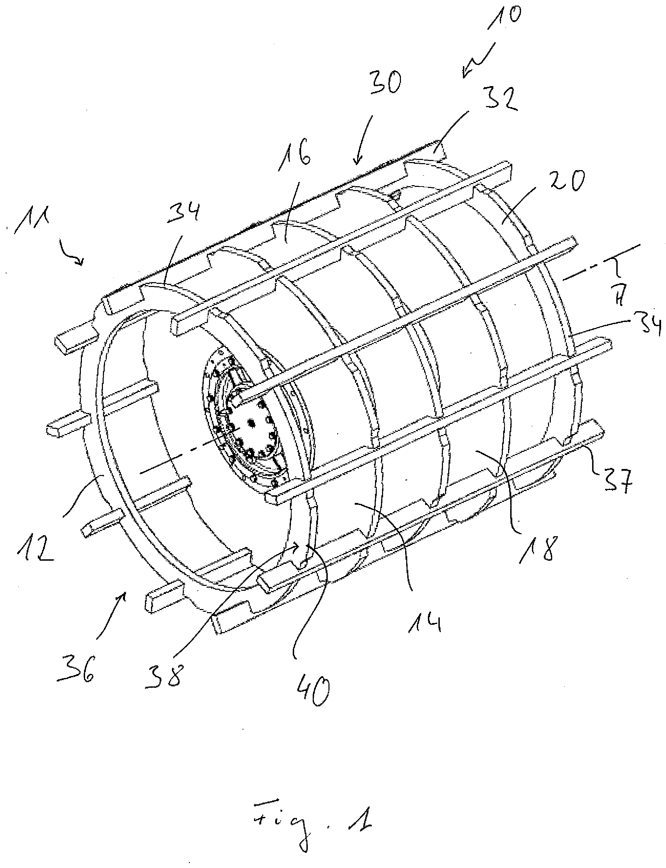

Die Fig. 1 bis 3 zeigen eine allgemein mit dem Bezugszeichen 10 bezeichnete, nicht gemäß den Prinzipien der vorliegenden Erfindung aufgebaute Bodenbearbeitungswalze, welche dazu eingesetzt werden kann, einen festen Untergrund, beispielsweise einen Betonuntergrund, zu zerkleinern. Die Bodenbearbeitungswalze 10 umfasst in diesem Ausgestaltungsbeispiel eine Trägerstruktur 11 mit einer Mehrzahl von in Richtung einer Walzendrehachse A aufeinanderfolgend angeordneten Trägerscheiben 12, 14, 16, 18, 20. Die Trägerscheiben 12, 14, 16, 18, 20 sind grundsätzlich ringartig ausgestaltet und sind in ihrem Außenumfangsbereich mit im Wesentlichen kreisartiger Kontur gestaltet. Die im zentralen Bereich der Bodenbearbeitungswalze 10 liegenden Trägerscheiben 14, 16, 18 sind eine im Wesentlichen zylindrisch ausgebildete Umfangswandung 22 eines allgemein mit 24 bezeichneten Gehäuses umgebend angeordnet und beispielsweise an der Außenoberfläche der Umfangswandung 22 durch Verschweißung festgelegt. An beiden axialen Endbereichen ist das Gehäuse 24 jeweils über eine Stirnwand 26 bzw. 28 angeschlossen. Im Bereich dieser Stirnwände 26, 28 kann die Bodenbearbeitungswalze 10 an einem nachfolgend noch beschriebenen Maschinenrahmen einer Bodenbearbeitungsmaschine um die Walzendrehachse A drehbar getragen sein. Im Inneren des Gehäuses 24 kann ein nachfolgend ebenfalls noch erläuterter Schwingungserzeugungsmechanismus angeordnet sein, durch welchen einer im Bodenbearbeitungsbetrieb durchgeführten Abrollbewegung der Bodenbearbeitungswalze 10 um die Walzendrehachse A eine vorzugsweise im Wesentlichen orthogonal zur Walzendrehachse A orientierte Schwingung, allgemein auch als Vibration bezeichnet, überlagert werden kann.

Am Außenumfangsbereich der Trägerscheiben 12, 14, 16, 18, 20 sind im Wesentlichen in Richtung der Walzendrehachse A sich erstreckende erste Bodenbearbeitungseinheiten 30 vorgesehen. In dem in den Fig. 1 bis 3 dargestellten Ausgestaltungsbeispiel umfasst jede Bodenbearbeitungseinheit 30 einen Bodenbearbeitungsbalken 32. In Zuordnung zu dem Bodenbearbeitungsbalken 32 der ersten Bodenbearbeitungseinheiten 30 sind am Außenumfangsbereich der Trägerscheiben 12, 14, 16, 18, 20 nach radial außen offene Aussparungen ausgebildet, in welche die Bodenbearbeitungsbalken 32 so eingesetzt sind, dass sie nach radial außen über den kreisartigen Grund-Außenumfang 34 der Trägerscheiben 12, 14, 16, 18, 20 hervorstehen und somit mit einem jeweiligen Bodenbearbeitungsbereich 37 in Kontakt mit dem zu bearbeitenden Untergrund treten können. Der Bodenbearbeitungsbereich 37 kann, sowie in den Figuren erkennbar, beispielsweise zwei durch orthogonal aufeinander zu laufende Oberflächen gebildete Bearbeitungskanten aufweisen.

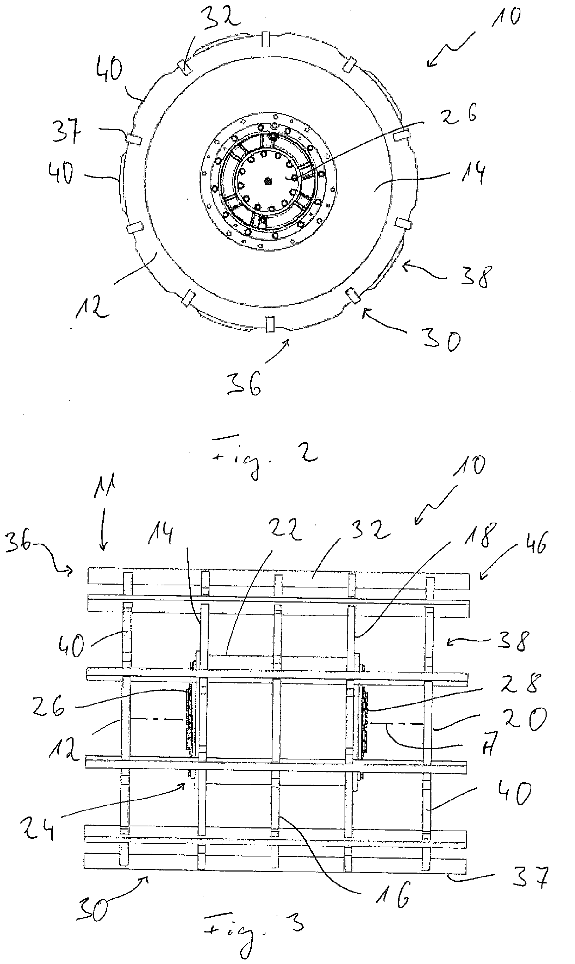

Die Bodenbearbeitungsbalken 32 sind mit den Trägerscheiben 12, 14, 16, 18, 20 durch Verschweißung fest verbunden, so dass grundsätzlich eine skelettartige, nach radial außen offene Struktur eines im Wesentlichen mit den Trägerscheiben 12, 14, 16, 18, 36, dem Gehäuse 24 und den ersten Bodenbearbeitungseinheiten 30 bzw. den Bodenbearbeitungsbalken 32 derselben gebildeten Walzenkörpers 36 bereitgestellt wird. Man erkennt dabei insbesondere in den Fig. 1 und 3, dass die in den jeweiligen axialen Endbereichen des Walzenkörpers 36 vorgesehenen Trägerscheiben 14, 20 nur über diese ersten Bodenbearbeitungseinheiten 30 an den Walzenkörper 36 bzw. die anderen Trägerscheiben 14, 16, 18 angebunden sind. Um dabei einen möglichst freien Zugriff auf die Stirnwände 26, 28 des Gehäuses 24 zu erhalten, können die Trägerscheiben 12, 20 mit einer größeren, im Innenbereich derselben vorgesehenen Öffnung ausgebildet sein, als die an die Umfangswandung 22 des Gehäuses 24 angebundenen Trägerscheiben 14, 16, 18.

An den Trägerscheiben 12, 14, 16, 18, 20 sind ferner zweite Bodenbearbeitungseinheiten 38 vorgesehen. Diese sind im dargestellten Ausgestaltungsbeispiel mit den Trägerscheiben 12, 14, 16, 28, 20 integral, also einstückig ausgebildet und umfassen über den Grund-Außenumfang 34 der Trägerscheiben 12, 14, 16, 18, 20 nach radial außen hervorstehende Bodenbearbeitungsvorsprünge 40. Diese erstrecken sich in Umfangsrichtung jeweils zwischen zwei einander unmittelbar benachbarten ersten Bodenbearbeitungseinheiten 30 bzw. den Bodenbearbeitungsbalken 32 derselben derart, dass sie mit Umfangsabstand dazu kantenartig enden. Vorzugsweise weisen die Bodenbearbeitungsvorsprünge 40 eine derartige radiale Vorsprungshöhe über den Grund-Außenumfang 34 der Trägerscheiben 12, 14, 16, 18, 20 auf, dass sie den gleichen Außenradius definieren, wie die Bodenbearbeitungsbalken 32 mit ihren Bodenbearbeitungsbereichen 37. Die Bodenbearbeitungsvorsprünge 40 berühren somit ebenso wie die Bodenbearbeitungsbereiche 37 der Bodenbearbeitungsbalken 32 eine fiktive, den Walzenkörper 36 umhüllende zylindrische Fläche. Man erkennt in Fig. 1, dass bei jeder Trägerscheibe 12, 14, 16, 18, 20 alternierend zwischen zwei in Umfangsrichtung unmittelbar benachbarten ersten Bodenbearbeitungseinheiten 30 eine zweite Bodenbearbeitungseinheit 38 vorgesehen ist bzw. keine zweite Bodenbearbeitungseinheit 38 vorgesehen ist. Ein entsprechendes Muster ist bei Betrachtung in axialer Richtung vorgesehen. Hier ist alternierend bei in Richtung der Walzendrehachse A aufeinanderfolgenden Trägerscheiben 12, 14, 16, 18, 20 zwischen jeweils zwei ersten Bodenbearbeitungseinheiten 30 eine zweite Bodenbearbeitungseinheit 38 vorgesehen bzw. keine zweite Bodenbearbeitungseinheit 38 vorgesehen.

Durch die nach radial außen offene, skelettartige Struktur des Walzenkörpers 36 wird eine Bodenbearbeitungswalze 10 mit grundsätzlich hoher Stabilität, gleichwohl vergleichsweise geringem Eigengewicht bereitgestellt. Dies bedeutet, dass die bei Erzeugung einer Schwingung durch einen in dem Gehäuse 24 angeordneten Schwingungserzeugungsmechanismus in Schwingung zu versetzende Masse der Bodenbearbeitungswalze 10 vergleichsweise gering ist, so dass diese Schwingung, also beispielsweise eine Vibrationsbewegung bzw. Vibrationsbeschleunigung, sehr effizient zum stoßartigen Verkleinern des Untergrunds genutzt werden kann, auf welchen die Bodenbearbeitungswalze 10 abrollt.

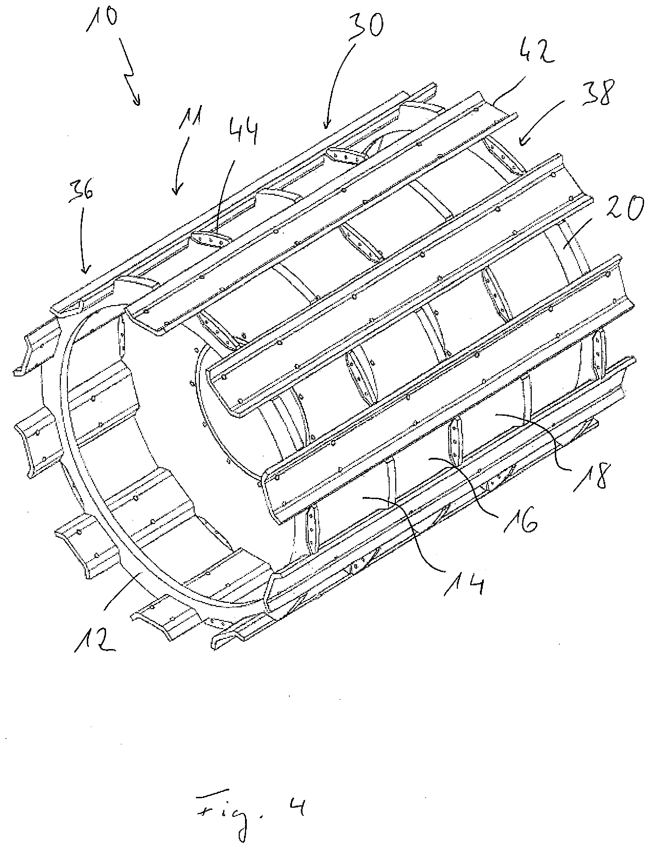

Eine erfindungsgemäße Ausgestaltung einer Bodenbearbeitungswalze 10 ist in den Fig. 4 bis 6 dargestellt. Man erkennt in den Fig. 4 bis 6, dass am Außenumfangsbereich der in Umfangsrichtung aufeinanderfolgend angeordneten Trägerscheiben 12, 14, 16, 18, 20 in Umfangsrichtung aufeinanderfolgend jeweilige schalen- bzw. wannenartig geformte und somit bei Betrachtung von radial außen konkav geformte Werkzeugträger 42 der jeweiligen ersten Bodenbearbeitungseinheiten 36 vorgesehen. Die Werkzeugträger 42 sind mit den Trägerscheiben 12, 14, 16, 18, 20 durch Verschweißung fest verbunden.

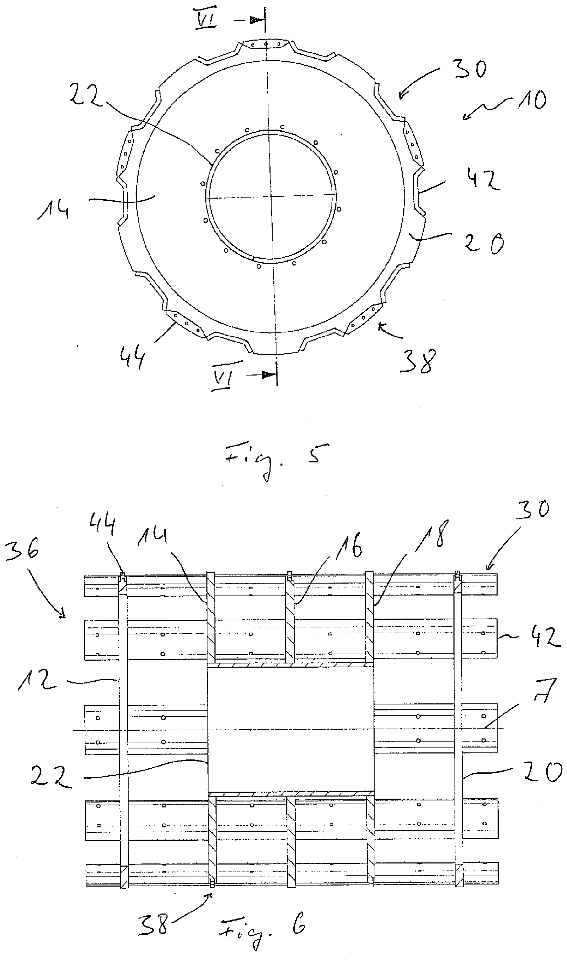

Gleichermaßen umfassen die bei der Ausgestaltungsform der Fig. 4 bis 6 dargestellten zweiten Bodenbearbeitungseinheiten 38 am Außenumfangsbereich der Trägerscheiben 12, 14, 16, 18, 20 jeweilige Bodenbearbeitungsvorsprung-Trägerbereiche 44. Hier ist ein ähnliches Anordnungsmuster erkennbar, wie vorangehend beschrieben. Man erkennt in Fig. 5, dass in Umfangsrichtung alternierend an jeder Trägerscheibe 12, 14 , 16, 18, 20 zwischen jeweils zwei in Umfangsrichtung unmittelbar benachbarten ersten Bodenbearbeitungseinheiten 30 bzw. den schalenartigen Werkzeugträgern 42 derselben jeweils ein Bodenbearbeitungsvorsprung-Trägerbereich 44 vorgesehen ist bzw. kein Bodenbearbeitungsvorsprung-Trägerbereich 44 vorgesehen ist, wobei eine entsprechende alternierende Anordnung auch in der axialen Abfolge der Trägerscheiben 12, 14, 16, 18, 20 zwischen jeweils zwei in Umfangsrichtung einander unmittelbar benachbarten Werkzeugträgern 42 der ersten Bodenbearbeitungseinheiten 42 realisiert ist.

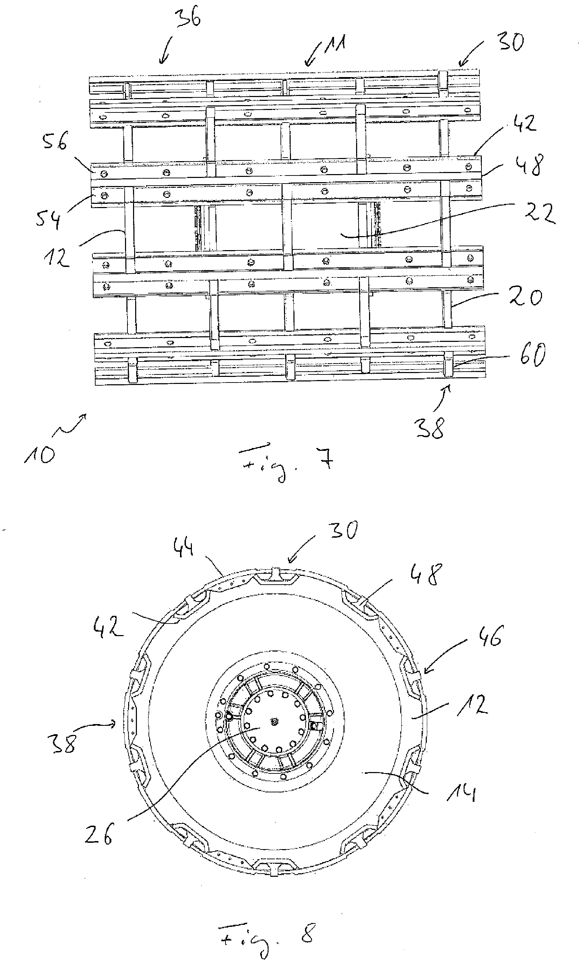

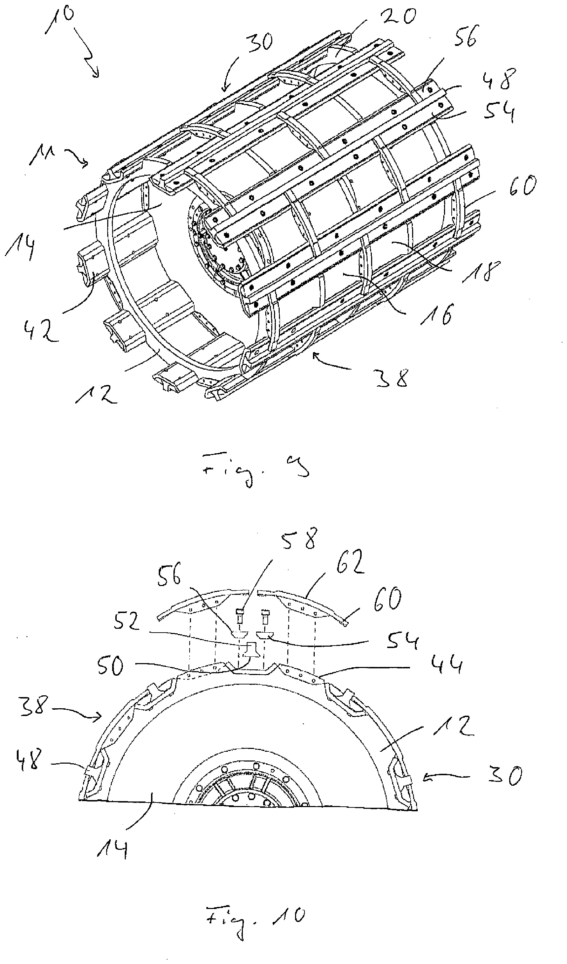

Die Fig. 7 bis 10 zeigen die vorangehend mit Bezug auf die Fig. 4 bis 6 beschriebene Bodenbearbeitungswalze 10 mit an den Werkzeugträgern 42 der ersten Bodenbearbeitungseinheiten 36 lösbar angebrachten und ebenso wie bei der Ausgestaltungsform der Fig. 1 bis 3 als Bodenbearbeitungswerkzeuge 46 wirksamen Bodenbearbeitungsbalken 48. Wie insbesondere in Fig. 10 erkennbar, sind die Bodenbearbeitungsbalken 48 mit einem sich erweiternden, beispielsweise trapezartig geformten Sockelbereich 50 und einem davon nach radial außen vorstehenden Bodenbearbeitungsbereich 52 ausgebildet. Zum Festlegen der Bodenbearbeitungsbalken 48 an den jeweiligen Werkzeugträgern 42 werden entlang der Bodenbearbeitungsbalken 50 sich erstreckende Fixierleisten 54, 56 eingesetzt, welche einerseits an das Profil des Sockelbereichs 50 und andererseits an das konkave Profil der Werkzeugträger 42 angepasst sind und somit im Anbringungszustand zusammen mit den durch diese jeweils am Werkzeugträger 42 geklemmten Bodenbearbeitungsbalken 48 den Innenraum der konkav geformten Werkzeugträger 42 im Wesentlichen vollständig ausfüllen. Die Fixierleisten 54, 56 können beispielsweise durch Schraubbolzen 58 an den Werkzeugträgern 42 festgelegt werden, wodurch eine stabile Klemmung der Bodenbearbeitungsbalken 48 erreicht wird. Vorzugsweise erstrecken die Bodenbearbeitungsbalken 48 und die diesen jeweils zugeordneten Fixierleisten 54, 56 sich über die gesamte axiale Länge der Werkzeugträger 42.

In Zuordnung zu den an den Trägerscheiben 12 ,14, 16, 18, 20 vorgesehenen Bodenbearbeitungsvorsprung-Tragebereichen 44 umfassen die zweiten Bodenbearbeitungseinheiten 38 als separate Bauteile ausgebildete, bogensegmentförmig gestaltete Bodenbearbeitungsvorsprung-Träger 60, welche die Bodenbearbeitungsvorsprung-Tragebereiche 44 U-förmig von radial außen her um greifen können. Diese sind beispielsweise so dimensioniert, dass sie sich jeweils vollständig zwischen zwei in Umfangsrichtung unmittelbar benachbarten Bodenbearbeitungsbalken 48 bzw. den Bodenbearbeitungsbereichen 52 derselben erstrecken und in Umfangsabstand zu den Bodenbearbeitungsbereichen 52 eine vergrößerte radiale Vorsprungshöhe aufweisen und damit Bodenbearbeitungsvorsprünge 62 bilden. In diesen Bereichen mit vergrößerter radialer Vorsprungshöhe enden vorzugsweise die als separate Bauteile ausgebildeten Bodenbearbeitungsvorsprunge-Träger 60 auf gleichem radialen Niveau, wie die Bodenbearbeitungsbereiche 52 der Bodenbearbeitungsbalken 48.

Ebenso wie die Fixierleisten 54, 56 können auch die als separate Bauteile ausgebildete Bodenbearbeitungsvorsprung-Träger 60 der zweiten Bodenbearbeitungseinheiten 38 durch Verschraubung am Walzenkörper 36, insbesondere den Trägerscheiben 12, 14, 16, 18, 20 festgelegt werden.

Die vorangehend mit Bezug auf die Fig. 4 bis 10 beschriebene erfindungsgemäße Ausgestaltungsform weist den Vorteil auf, dass sie bei gleichwohl stabiler Konfiguration eine Austauschbarkeit der in Kontakt mit dem zu bearbeitenden Untergrund tretenden Bodenbearbeitungsbalken 48 bzw. Bodenbearbeitungsvorsprung-Träger 60 ermöglicht. Auch können durch diese Ausgestaltung in einfacher Weise mit verschiedener Formgebung aufgebaute Bodenbearbeitungsbalken 48 bzw. Bodenbearbeitungsvorsprung-Träger 60 am Walzenkörper 36 vorgesehen werden, so dass eine so aufgebaute Bodenbearbeitungwalze 10 in einfacher Weise an verschiedene Einsatzzwecke anpassbar ist.

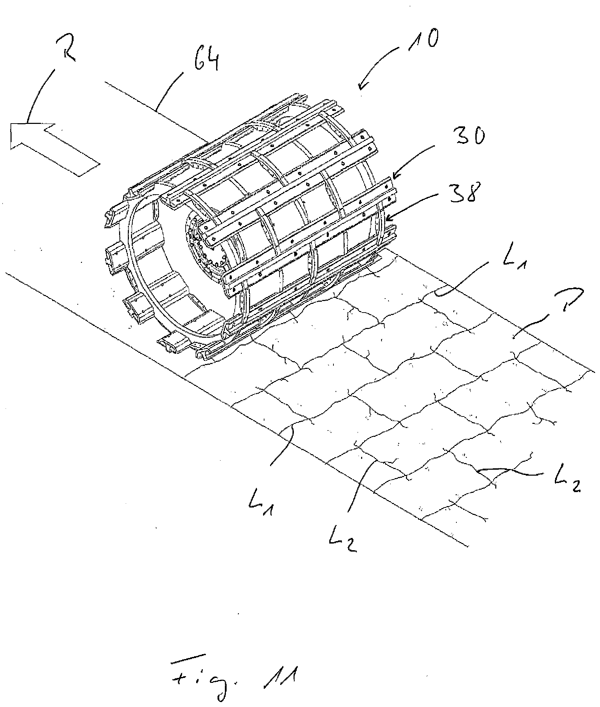

Die Fig. 11 veranschaulicht, wie eine mit dem vorangehenden Aufbau bereitgestellte Bodenbearbeitungswalze 10 in Wechselwirkung mit dem zu bearbeitenden Untergrund 64 tritt. Man erkennt einerseits dass dort, wo die Bodenbearbeitungsbalken 32 bzw. 48 mit ihren jeweiligen Bodenbearbeitungsbereichen 37 bzw. 52 in Kontakt mit dem Untergrund 64 treten, sich im Wesentlichen quer zur Bewegungsrichtung R der Bodenbearbeitungswalze 10 erstreckende Bruchlinien L₁ ergeben, welche über die gesamte axiale Erstreckungslänge der Bodenbearbeitungswalze 10 im Wesentlichen unterbrechungsfrei durchlaufen. In der Bewegungsrichtung R ergeben sich immer dort, wo die axial und radial alternierend angeordneten Bodenbearbeitungsvorsprünge 40 bzw. 62 in Kontakt mit dem Untergrund 64 treten, zwischen jeweils zwei Bruchlinien L₁ sich erstreckende Bruchlinien L₂. Somit wird der Untergrund 64, also beispielsweise ein aufzubrechender Betonuntergrund, in eine Vielzahl von versetzt zueinander liegenden Plattenbereichen P aufgebrochen, die dann durch eine andere Bodenbearbeitungsmaschine, beispielsweise einen Bagger oder dergleichen, vergleichsweise leicht abgenommen werden können. Beispielsweise können die ersten und zweiten Bodenbearbeitungseinheiten 30, 38 so über den Außenumfang der Bodenbearbeitungswalze 10 verteilt sein, dass ein gegenseitiger Abstand der Bruchlinien L₁ von maximal 50-70 cm entsteht, während der gegenseitige Abstand der Bruchlinien L₂ näherungsweise dem Doppelten des Abstandes der Bruchlinien L₁ entsprechen kann. Es entstehen somit Segmente, die der weiteren Bearbeitung leicht zugeführt werden können.

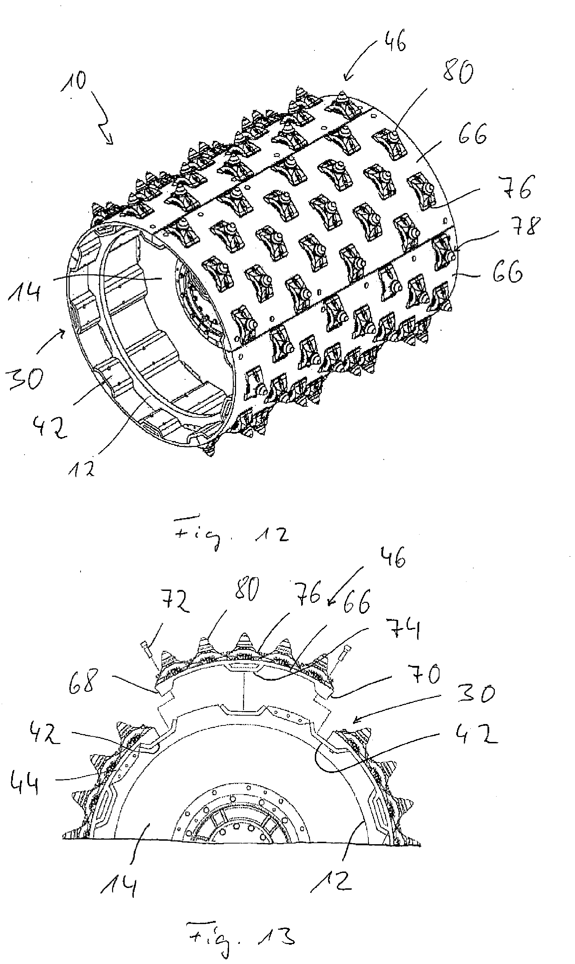

Die Fig. 12 und 13 veranschaulichen, dass der Walzenkörper 36, wie er vorangehend mit Bezug auf die Fig. 4 bis 10 beschrieben werden, auch in anderer Weise eingesetzt werden kann. Insbesondere können an den Werkzeugträgern 42 der ersten Bodenbearbeitungseinheiten 30 in Richtung der Walzendrehachse A vorzugsweise über die gesamte Länge der Bodenbearbeitungswalze 10 bzw. des Walzenkörpers 36 sich erstreckende Bodenbearbeitungsschalen 66 als Bodenbearbeitungswerkzeuge 46 vorgesehen werden. Diese sind vorzugsweise so dimensioniert, dass sie sich in Umfangsrichtung über jeweils drei Werkzeugträger 42 derart erstrecken, dass sie mit einem jeweils an einem Umfangsendbereich vorgesehenem Werkzeugträgereingriffsbereich 68, 70 hälftig in einen jeweiligen Werkzeugträger 42 eingreifen, wobei die Werkzeugträger-Eingriffsbereiche 68, 70 an die konkave Formgebung des Werkzeugträgers 42 angepasst sind, so dass die Werkzeugträger-Eingriffsbereiche zweier in Umfangsrichtung aufeinanderfolgender Bodenbearbeitungsschalen 66 jeweils zusammen einen der konkav gestalteten Werkzeugträger 42 vollständig ausfüllen und daran durch Schraubbolzen 72 festgelegt werden. In einem in Umfangsrichtung zentralen Bereich weisen die Bodenbearbeitungsschalen 66 einen weiteren Werkzugträger-Eingriffsbereich 74 auf, der so positioniert und geformt ist, dass er einen von einer jeweiligen Bodenbearbeitungsschale 66 in Umfangsrichtung vollständig übergriffenen Werkzeugträger 42 im Wesentlichen vollständig ausfüllt bzw. an diesem aufliegt. Auf diese Art und Weise wird eine erhöhte Abstützstabilität der Bodenbearbeitungsschalen 66 gewährleistet.

Durch die in Umfangsrichtung aufeinanderfolgend angeordneten Bodenbearbeitungsschalen 66 wird der Walzenkörper 36 nach außen hin vollständig abgeschlossen. Bei dem in den Fig. 12 und 13 dargestellten Ausgestaltungsbeispiel sind an der Außenseite der Bodenbearbeitungsschalen 66 jeweils mehrere Wechselhalter 76 beispielsweise durch Verschweißung festgelegt. In die Wechselhalter 76 können Walzenwerkzeuge 78, im dargestellten Beispiel Meißel 80, lösbar eingesetzt werden, so dass einerseits zum Ersetzen von Walzenwerkzeugen 78 durch andere Walzenwerkzeuge, beispielsweise durch Stampffüße oder dergleichen, ein entsprechender Austausch erfolgen kann, andererseits verschlissene Walzenwerkzeuge durch neue Walzenwerkzeuge ersetzt werden können.

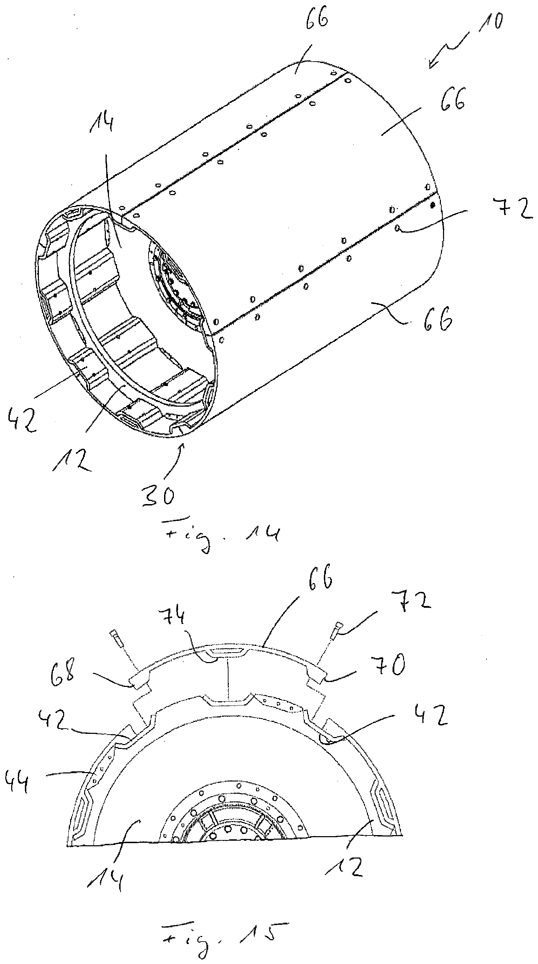

Die Fig. 14 und 15 zeigen eine Konfiguration, bei welcher an den Bodenbearbeitungsschalen 66 an der Außenseite keine Wechselhalter oder Walzenwerkzeuge oder sonstigen Formationen vorgesehen sind. Die Bodenbearbeitungsschalen 66 bilden somit eine in Umfangsrichtung geschlossene, im Wesentlichen glatte Konfiguration, so dass eine so aufgebaute Bodenbearbeitungswalze 10 beispielsweise zum Verdichten eines Untergrunds eingesetzt werden kann. Dies zeigt die hohe Variabilität einer Bodenbearbeitungswalze 10, die mit einem skelettartig, grundsätzlich nach radial außen offenen Walzenkörper 36 mit den daran vorgesehenen Werkzeugträgern 42 der ersten Bodenbearbeitungseinheiten 30 aufgebaut sind. Bei der vorangehend mit Bezug auf die Fig. 12 bis 15 beschriebenen Konfiguration, bei welcher an einen Außenumfang eines derartig aufgebauten Walzenkörper 36 die Bodenbearbeitungsschalen 66 angebunden werden, werden die Bodenbearbeitungsvorsprung-Trägerbereiche 44 der zweiten Bodenbearbeitungseinheiten 38 im Wesentlichen nicht genutzt bzw. dienen lediglich zur radialen Abstützung der darüber sich erstreckenden Bereiche der Bodenbearbeitungsschalen 66.

Die in den Fig. 12-15 dargestellten Bodenbearbeitungsschalen 66 können auch in anderer Weise konfiguriert sein. So können beispielsweise an der Außenoberfläche der Bodenbearbeitungsschalen 66 balkenartige Walzenwerkzeuge beispielsweise durch Verschweißung oder Verschraubung oder dergleichen festgelegt sein. Derartige Walzenwerkzeuge können beispielsweise in zickzackartigem Verlauf in Umfangsrichtung um die Walzendrehachse sich erstreckend angeordnet sein oder können kreisringartig um die Walzendrehachse sich erstrecken oder/und im Wesentlichen in Richtung der Walzendrehachse sich erstrecken. Ferner können die Bodenbearbeitungsschalen 66 selbst eine offene, beispielsweise gitterartige Struktur aufweisen, bei welcher zwischen einer Vielzahl von diese offene Struktur bildenden Streben Öffnungen gebildet sind. Diese die gitterartige strukturbildenden Streben können zum Teil in Umfangsrichtung, in Richtung der Walzendrehachse oder schräg dazu sich erstreckend verlaufen und können selbst als Walzenwerkzeuge wirksam bzw. ausgebildet sein oder können als Werkzeugträger ausgebildet sein, an welchen zusätzliche, in Kontakt mit dem zu bearbeitenden Untergrund tretende Walzenwerkzeuge durch Verschraubung festgelegt werden können.

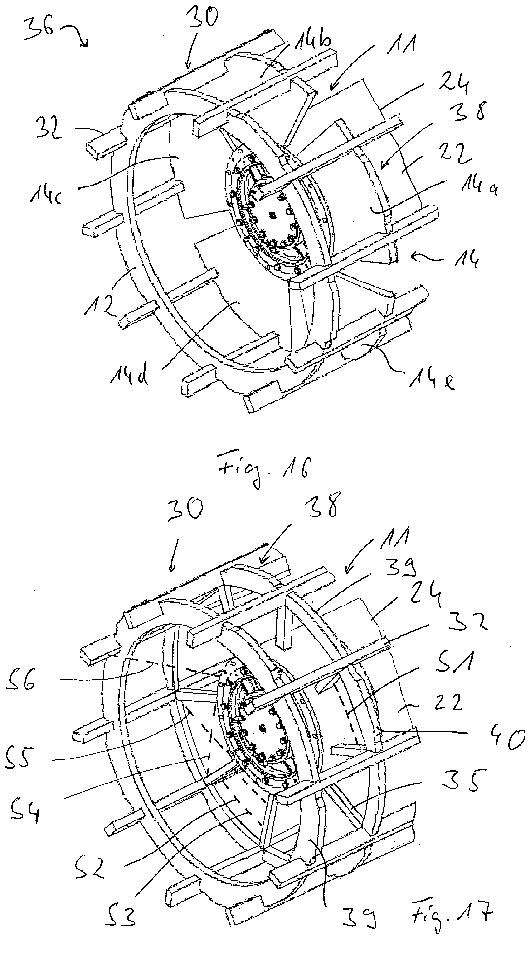

Die Fig. 16 und 17 zeigen ausschnittsweise alternative Ausgestaltungsarten der Trägerstruktur 11 des Walzenkörpers 36 bei einer hinsichtlich der Ausgestaltung der Bodenbearbeitungseinheiten 30 nicht gemäß den Prinzipien der vorliegenden Erfindung aufgebauten Bodenbearbeitungswalze. In Fig. 16 ist beispielsweise in Verbindung mit der Trägerscheibe 14 zu erkennen, dass diese eine Mehrzahl von Segmenten 14a, 14b ,14c, 14d, 14e umfasst, die jeweils mit Umfangsabstand zueinander angeordnet sind und in ihrem radial äußeren Bereich jeweils zwei der ersten Bodenbearbeitungseinheiten 30 bzw. Bodenbearbeitungsbalken 32 derselben tragen. Auch die anderen Trägerscheiben, insbesondere die mit der Umfangswandung 22 des Gehäuses 24 fest verbundenen Trägerscheiben 16, 18, können in derartig segmentierter Weise ausgebildet sein.

Bei der in Fig. 17 dargestellten Ausgestaltungsform ist die Trägerstruktur 11 mit einer Vielzahl von beispielsweise ebenfalls an die Umfangswandung 22 des Gehäuses 24 angebundenen, beispielsweise im Wesentlichen radial sich erstreckenden Trägerstreben 35 aufgebaut. Diese können beispielsweise in Umfangsrichtung kranzartig aufeinanderfolgend jeweils dort vorgesehen sein, wo in den vorangehend beschriebenen Ausgestaltungsformen die an die Umfangswandung 22 angebundenen Trägerscheiben positioniert sind, können gleichermaßen aber auch an anderen axialen Positionen und axial zueinander versetzt angeordnet sein.

An den radial äußeren Endbereichen der Trägerstreben 35 sind die in axialer Richtung sich erstreckenden ersten Bodenbearbeitungseinheiten 30, beispielsweise die Bodenbearbeitungsbalken 32 derselben oder die vorangehend auch beschriebenen Werkzeugträger 42, z.B. durch Verschweißen festgelegt. In Umfangsrichtung zwischen den Trägerstreben 35 bzw. den an diese angebundenen ersten Bodenbearbeitungseinheiten 30 sind die zweiten Bodenbearbeitungseinheiten 38 vorgesehen. Diese können, so wie im Falle der Trägerscheibe 12, zu einem Ring zusammengefasst sein und einerseits an die radial äußeren Enden der Trägerstreben 35 beispielsweise durch Verschweißen angebunden sein und andererseits die ersten Bodenbearbeitungseinheiten 30 tragen. Alternativ können zwischen in Umfangsrichtung aufeinanderfolgenden Trägerstreben 35 bzw. ersten Bodenbearbeitungseinheiten 30 Segmente 39 vorgesehen sein, von welchen beispielsweise in Umfangsrichtung jedes zweite Segment 39 einen nach radial außen vorstehenden Bodenbearbeitungsvorsprung 40 aufweist. Die Verteilung dieser jeweilige Bodenbearbeitungsvorsprünge 40 aufweisenden Segmente 39 kann so sein, wie vorangehend beschrieben. Es kann also sowohl in Umfangsrichtung, als auch in axialer Richtung jeweils eine Abfolge von Bodenbearbeitungsvorsprünge 40 aufweisenden Segmenten 39 und keine Bodenbearbeitungsvorsprünge 40 aufweisenden Segmenten 39 vorgesehen sein. Im Sinne der vorliegenden Erfindung ersetzen die Segmente 39 also die bei den vorangehenden Ausgestaltungsformen beschriebenen Bereiche der dort positionierten Trägerscheiben und können deren Funktion vollständig übernehmen. Insbesondere könnte auch vorgesehen sein, dass die zweiten Bodenbearbeitungseinheiten 38 als separate Bauteile bzw. Werkzeuge ausgebildete Bodenbearbeitungsvorsprünge umfassen, die dann an den zur Aufnahme derselben als Bodenbearbeitungsvorsprung-Träger ausgebildeten Segmenten 39 festgelegt werden können.

Die Fig. 17 veranschaulicht weiter, dass zur Erhöhung der Stabilität mit den Trägerstreben 35 und gegebenenfalls dem Gehäuse 24 verbundene Versteifungsstreben vorgesehen sein können. So können Versteifungsstreben S1 vorgesehen sein, die beispielsweise in Umfangsrichtung verlaufend benachbarte Trägerstreben 35 miteinander fest verbinden. Wie anhand der Versteifungsstreben S2 und S3 veranschaulicht, können auch mehrere derartige Streben radial gestaffelt positioniert sein. Die Versteifungsstreben S4, S5 zeigen, dass auch eine kreuzartige bzw. sich überschneidende Anordnung möglich ist. Die Versteifungstrebe S6 zeigt, dass insbesondere auch die axialen Endbereiche der ersten Bodenbearbeitungseinheiten 30, welche über das Gehäuse 24 axial hervorstehen, durch bezüglich des Gehäuses 24 sich abstützende Versteifungsstreben gestützt werden können, so das gegebenenfalls auf die dort erkennbare Trägerscheibe 12 verzichtet werden kann.

Es ist darauf hinzuweisen, dass selbstverständlich in Zuordnung zu allen Trägerstreben 35 bzw. Bodenbearbeitungseinheiten derartige Versteifungsstreben vorgesehen sein können, wobei verschiedene Konfigurationen der Versteifungsstreben in Zuordnung zu verschiedenen Trägerstreben vorgesehen sein können. Auch kann die Trägerstruktur 11 eine Kombination von Trägerscheiben und Träger streben bzw. Versteifungsstreben umfassen, um auf diese Art und Weise eine weiter erhöhte Steifigkeit des Walzenkörpers 36 zu erreichen.

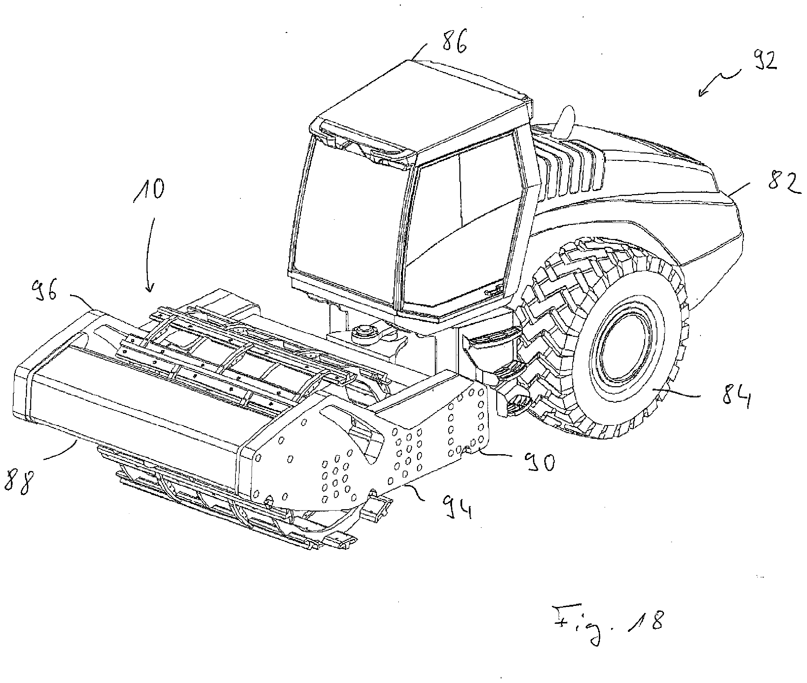

Die Fig. 18 zeigt eine allgemein mit 92 bezeichnete Bodenbearbeitungsmaschine, bei welcher eine erfindungsgemäß aufgebaute Bodenbearbeitungswalze 10, beispielsweise mit dem in den Fig. 4 bis 10 erläuterten Aufbau eingesetzt ist. Die grundsätzlich nach Art eines Bodenverdichters aufgebaute Bodenbearbeitungsmaschine umfasst an einem Hinterwagen 82 durch ein nicht dargestelltes Antriebsaggregat zur Voranbewegung der Bodenbearbeitungsmaschine 80 angetriebene Räder 84. Ferner ist am Hinterwagen 82 ein Bedienstand 86 vorgesehen, in welchem eine die Bodenbearbeitungsmaschine 92 bedienende Bedienperson Platz finden kann. Ein Vorderwagen 88 umfasst einen mit dem Hinterwagen 82 gelenkig verbundenen Maschinenrahmen 90, an welchem die Bodenbearbeitungswalze 10 zwischen zwei Trägern 94, 96 drehbar getragen ist. Wie vorangehend bereits dargelegt, kann diese drehbare Anbindung beispielsweise über die Stirnwände 26, 28 des im zentralen Bereich der Bodenbearbeitungswalze 10 vorgesehenen Gehäuses 24 erfolgen.

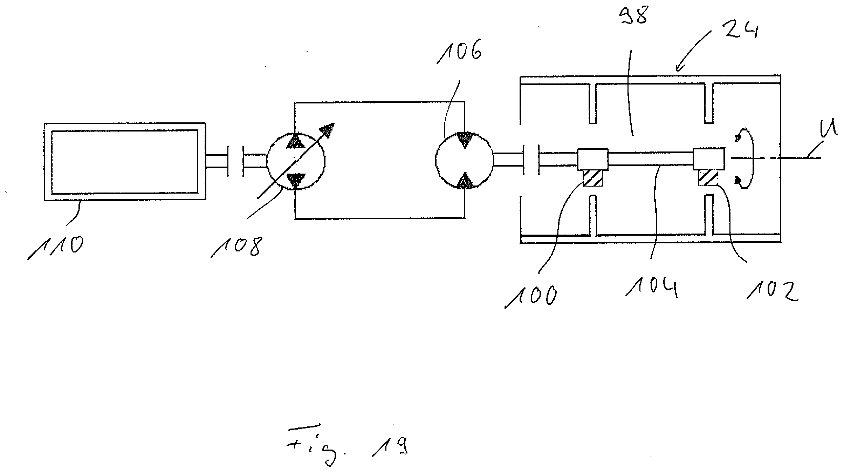

Die Fig. 19 veranschaulicht einen im Inneren der Bodenbearbeitungswalze 10, insbesondere im Inneren des Gehäuses 24 angeordneten Schwingungserzeugungsmechanismus 98. Dieser umfasst im dargestellten Beispiel zwei Unwuchtmassen 100, 102, welche an einer Unwuchtwelle 104 um eine im Wesentlichen der Walzendrehachse A entsprechende Unwuchtdrehachse U drehbar getragen sind. Ein Unwuchtantriebsmotor 106 kann beispielsweise im Inneren des Gehäuses 24 angeordnet sein oder kann an einer der beiden Stirnwände 26, 28 getragen sein. Im dargestellten Beispiel ist der Unwuchtantriebsmotor 106 als Hydraulikmotor ausgebildet, der über eine Hydraulikpumpe 108 mit Hydraulikfluid gespeist wird. Die Hydraulikpumpe 108, welche vorzugsweise ein variables Fördervolumen aufweist, kann beispielsweise durch ein Antriebsaggregat 110 der Bodenbearbeitungsmaschine 92, beispielsweise einen Nebenabtrieb des Antriebsaggregat 110, angetrieben werden, kann grundsätzlich aber auch durch ein von dem für den Fahrantrieb vorgesehenen Antriebsaggregat der Bodenbearbeitungsmaschine 10 separat ausgebildeten Antriebsaggregat angetrieben werden. Grundsätzlich kann die Hydraulikpumpe 108 auch in den an der Bodenbearbeitungsmaschine 92 grundsätzlich vorgesehenen Hydraulikkreislauf integriert sein oder diesen repräsentieren, so dass, beispielsweise auch unter Einsatz entsprechender Ventileinheiten, im Bodenbearbeitungsbetrieb der Unwuchtantriebsmotor 106 in geeigneter Weise mit Druckfluid gespeist werden kann.

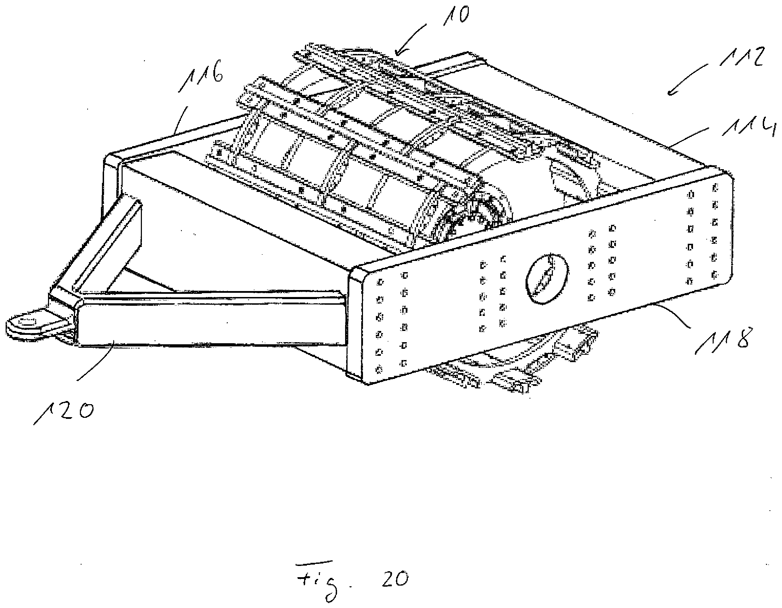

Eine alternative Ausgestaltungsart einer Bodenbearbeitungsmaschine 112 ist in Fig. 20 dargestellt. Die Bodenbearbeitungsmaschine 112 der Fig. 20 ist eine Anhänge-Bodenbearbeitungsmaschine, welche keinen eigenen Fahrantrieb aufweist. Die Bodenbearbeitungsmaschine 112 umfasst einen Maschinenrahmen 114 mit zwei die Bodenbearbeitungswalze 10 drehbar tragenden Trägern 116, 118. Über eine Anhängedeichsel 120 kann die Bodenbearbeitungsmaschine 112 an eine Zugmaschine, beispielsweise einen Traktor, einen Bodenverdichter, eine Planierraupe oder eine sonstige Baumaschine angekoppelt werden, um davon gezogen oder geschoben und dabei über den zu bearbeitenden Untergrund bewegt zu werden.

Es ist darauf hinzuweisen, dass an einer derartigen Anhänge-Bodenbearbeitungsmaschine 112 ein hydraulisch oder/und mechanisch wirkender Getriebemechanismus vorgesehen sein kann, über welchen die Bodenbearbeitungswalze 10 durch Ankopplung an ein Antriebsaggregat der Zugmaschine 124 zur Drehung angetrieben werden kann. Obgleich bei derartiger Ausgestaltung über den Getriebemechanismus ein Drehmoment auf die Bodenbearbeitungswalze 10 übertragen werden kann, wird im Sinne der vorliegenden Erfindung eine derartige Anhänge-Bodenbearbeitungsmaschine 112, bei welcher die Energie zur Übertragung eines Drehmoments auf die Bodenbearbeitungswalze 10 durch ein an der Zugmaschine 124 vorgesehenes Antriebsaggregat bereitgestellt wird, grundsätzlich nicht als selbstfahrende Bodenbearbeitungsmaschine, sondern als Anhänge-Bodenbearbeitungsmaschine betrachtet, da eine derartige Bodenbearbeitungsmaschine ohne Ankopplung an eine die Antriebsenergie bereitstellende Zugmaschine nicht betrieben werden kann.

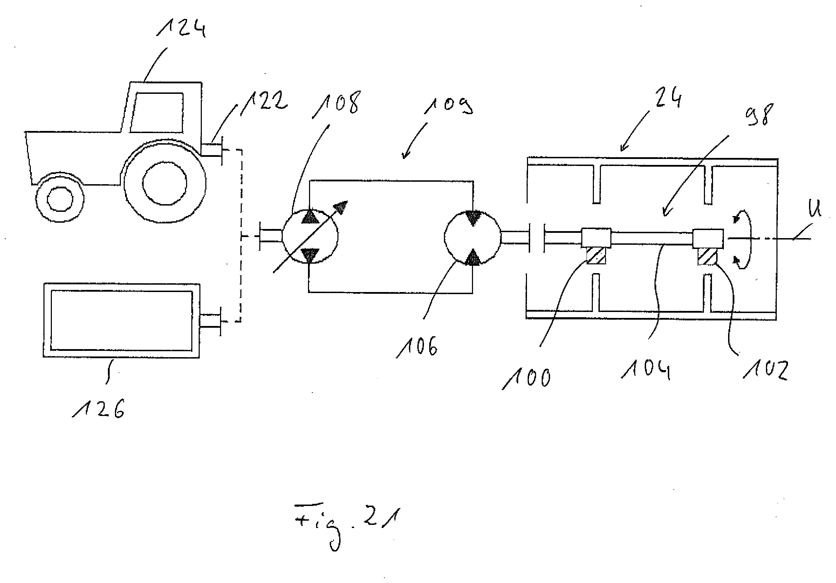

Um auch bei dem in Fig. 18 dargestellten Aufbau einer Bodenbearbeitungsmaschine 112 eine Bodenbearbeitungswalze 10 mit einem dieser zugeordneten Schwingungserzeugungsmechanismus 98 einsetzen zu können, kann die Hydraulikpumpe 108, wie in Fig. 21 in prinzipartiger Weise dargestellt, beispielsweise an eine Nebenabtriebswelle 122 eines auch für den Fahrantrieb dienenden Antriebsaggregats einer Zugmaschine 124 oder eine sonstige Zapfwelle der Zugmaschine 124 mechanisch angekoppelt werden. Dabei ist vorzugsweise der die Hydraulikpumpe 108 und den Hydraulikmotor 106 umfassende Hydraulikkreislauf 109 vollständig an der Bodenbearbeitungsmaschine 112 vorgesehen. Durch die Nebenabtriebswelle 122 wird die Hydraulikpumpe 108 angetrieben, wobei diese beispielsweise mit variablem Fördervolumen ausgebildet sein kann, um auf diese Art und Weise die geförderte Menge des Hydraulikfluids und somit auch die Drehzahl der Hydraulikmotors 106 einstellen zu können. Bei einer alternativen Ausgestaltung kann in Zuordnung zu der Hydraulikpumpe 108 bzw. dem Schwingungserzeugungsmechanismus 98 ein separates Antriebsaggregat 126 vorgesehen sein, welches unabhängig von dem für den Fahrantrieb der Zugmaschine 124 vorgesehenen Antriebsaggregat zum Betreiben der Hydraulikpumpe 108 und somit des Schwingungserzeugungsmechanismus 98 eingesetzt werden kann. Dieses Antriebsaggregat 126 kann beispielsweise an der Bodenbearbeitungsmaschine 112 zusammen mit dem Hydraulikkreislauf 109 vorgesehen sein kann, so dass die für den Antrieb des Schwingungserzeugungsmechanismus 98 erforderliche Energie an der Bodenbearbeitungsmaschine 112 selbst generiert und auf diesen Mechanismus übertragen werden kann.

Es sei abschließend darauf hingewiesen, dass die vorangehend beschriebene Bodenbearbeitungswalze in verschiedensten Aspekten variiert werden kann, ohne von den Prinzipien der vorliegenden Erfindung abzuweichen. So könnten beispielsweise die in Richtung der Walzendrehachse sich erstreckenden Bodenbearbeitungsbalken ebenso wie die Werkzeugträger der ersten Bodenbearbeitungseinheiten mit mehreren beispielsweise auch mit Abstand zueinander angeordneten oder/und in Umfangsrichtung zueinander versetzt liegenden Segmenten bereitgestellt sein. Auch könnten die mit im Wesentlichen kreisrunder Außenumfangskontur aufgebauten Trägerschreiben polygonartig ausgebildet sein, um auf diese Art und Weise eine an eine Kreisform angenäherte Kontur zu erreichen. Von Bedeutung ist für eine im Wesentlichen gleichmäßige Abrollbewegung, dass die mit dem Untergrund in Kontakt tretenden Bodenbearbeitungsbereiche der Bodenbearbeitungseinheiten näherungsweise auf einer gemeinsamen Zylinderfläche liegen.

Für die Bearbeitung des Untergrunds können die Bodenbearbeitungseinheiten bzw. die Bodenbearbeitungsbereiche derselben mit verschiedener Kontur ausgebildet sein. So können diese die in den Figuren erkennbare kantige Kontur mit näherungsweise rechteckigem Querschnitt aufweisen. Alternativ können die oder zumindest einige der Bodenbearbeitungsbereiche mit einer spitz zulaufenden, also keilartigen Kontur ausgebildet sein.

## Patentansprüche

1. Bodenbearbeitungswalze, umfassend eine Trägerstruktur (11), wobei zum Bilden eines um eine Walzendrehachse (A) drehbaren Walzenkörpers (36) an einem radial äußeren Bereich der Trägerstruktur (11) eine Mehrzahl von im Wesentlichen in Richtung der Walzendrehachse (A) sich erstreckenden ersten Bodenbearbeitungseinheiten (30) vorgesehen ist, wobei die Trägerstruktur (11) eine Mehrzahl von in Richtung einer Walzendrehachse (A) aufeinanderfolgend angeordneten, zum Bilden eines Walzenkörpers (36) miteinander verbundenen Trägerscheiben (12, 14, 16, 18, 20) umfasst, wobei an einem Außenumfangsbereich wenigstens eines Teils der Trägerscheiben (12, 14, 16, 18, 20) die Mehrzahl von im Wesentlichen in Richtung der Walzendrehachse (A) sich erstreckenden ersten Bodenbearbeitungseinheiten (30) vorgesehen ist, wobei wenigstens eine erste Bodenbearbeitungseinheit (30) einen Werkzeugträger (42) mit bezüglich des Außenumfangs des Walzenkörpers (36) konkaver Kontur umfasst und mit wenigstens einem Werkzeugträger (42) ein Bodenbearbeitungswerkzeug (46) lösbar verbunden oder verbindbar ist,
**dadurch gekennzeichnet,**
**dass** der wenigstens eine Werkzeugträger (42) wannenartig ausgebildet ist und mit wenigstens einem Teil der Trägerscheiben (12, 14, 16, 18, 20) durch Verschweißung fest verbunden ist.

2. Bodenbearbeitungswalze nach Anspruch 1,
**dadurch gekennzeichnet,**
**dass** der Walzenkörper (36) in seinem Außenumfangsbereich nach radial außen im Wesentlichen offen ausgebildet ist,
oder/und
an einem Außenumfangsbereich wenigstens eines Teils der Trägerscheiben (12, 14, 16, 18, 20) eine Mehrzahl von im Wesentlichen in Umfangsrichtung sich erstreckenden zweiten Bodenbearbeitungseinheiten (38) vorgesehen ist, vorzugsweise wobei wenigstens ein Teil der Trägerscheiben (12, 14, 16, 18, 20) mit im Wesentlichen kreisartiger Außenumfangskontur ausgebildet ist, oder/und dass wenigstens ein Teil der Trägerscheiben (14) eine Mehrzahl von in Umfangsabstand zueinander angeordneten Trägerscheibensegmenten (14a, 14b, 14 c, 14d, 14e) umfasst.

3. Bodenbearbeitungswalze nach einem der vorangehenden Ansprüche,
**dadurch gekennzeichnet,**
**dass** die Trägerstruktur (11) eine Mehrzahl von im Wesentlichen in Umfangsrichtung sich erstreckenden zweiten Bodenbearbeitungseinheiten (38) tragenden Trägerstreben (35) umfasst,
oder/und
**dass** die Trägerstruktur (11) eine Umfangswandung (22) eines Gehäuses (24) für einen Schwingungserzeugungsmechanismus (98) umgebend angeordnet ist oder/und an die Umfangswandung (22) angebunden ist.

4. Bodenbearbeitungswalze nach Anspruch 3,
**dadurch gekennzeichnet, dass** wenigstens ein Teil der Trägerscheiben (12, 14, 16, 18, 20) die Umfangswandung (22) des Gehäuses (24) umgebend angeordnet ist, wobei die die Umfangswandung (22) umgebend angeordneten Trägerscheiben (14, 16, 18) mit der Umfangswandung (22) fest verbunden sind, oder/und dass in wenigstens einem axialen Endbereich des Walzenkörpers (36) wenigstens eine Trägerscheibe (12, 20) mit den die Umfangswandung (22) umgebend angeordneten Trägerscheiben (14, 16, 18) durch wenigstens einen Teil der ersten Bodenbearbeitungseinheiten (30) verbunden ist, oder/und dass die die Umfangswandung (22) umgebend angeordneten Trägerscheiben (14, 16, 18) mit der Umfangswandung (22) durch Verschweißung fest verbunden sind.

5. Bodenbearbeitungswalze nach Anspruch 3 oder 4,
**dadurch gekennzeichnet, dass** in dem Gehäuse (24) ein Schwingungserzeugungsmechanismus (98) mit wenigstens einer um eine Unwuchtdrehachse (U) drehbaren Unwuchtmasse (100, 102) angeordnet ist, oder/und dass in wenigstens einem axialen Endbereich das Gehäuse (24) durch eine Stirnwand (26, 28) abgeschlossen ist, vorzugsweise wobei die Unwuchtdrehachse (U) im Wesentlichen der Walzendrehachse (A) entspricht, oder/und dass ein der wenigstens einen Unwuchtmasse (100, 102) zugeordneter Unwuchtantriebsmotor (106) an einer Stirnwand getragen ist.

6. Bodenbearbeitungswalze nach einem der vorangehenden Ansprüche,
**dadurch gekennzeichnet, dass** wenigstens eine erste Bodenbearbeitungseinheit (30) einen mit der Trägerstruktur (11) fest verbundenen Bodenbearbeitungsbalken (32) umfasst, vorzugsweise wobei eine Mehrzahl von Bodenbearbeitungsbalken (32) mit Umfangsabstand zueinander angeordnet ist.

7. Bodenbearbeitungswalze nach Anspruch 2 und Anspruch 6,
**dadurch gekennzeichnet, dass** der wenigstens eine Bodenbearbeitungsbalken (32) mit allen Trägerscheiben (12, 14, 16, 18, 20) fest verbunden ist, oder/und das der wenigstens eine Bodenbearbeitungsbalken (32) mit wenigstens einem Teil der Trägerscheiben (12, 14, 16, 18, 20) durch Verschweißung fest verbunden ist.

8. Bodenbearbeitungswalze nach einem der vorangehenden Ansprüche,
**dadurch gekennzeichnet, dass** jede erste Bodenbearbeitungseinheit (30) einen Werkzeugträger (42) umfasst, oder/und dass eine Mehrzahl von Werkzeugträgern (42) mit Umfangsabstand zueinander angeordnet ist.

9. Bodenbearbeitungswalze nach einem der Ansprüche 1-8,
**dadurch gekennzeichnet, dass** der wenigstens eine Werkzeugträger (42) mit jeder Trägerscheibe (12, 14, 16, 18, 20) fest verbunden ist.

10. Bodenbearbeitungswalze nach einem der vorangehenden Ansprüche,
**dadurch gekennzeichnet, dass** wenigstens ein Bodenbearbeitungswerkzeug (46) als Bodenbearbeitungsbalken (48) ausgebildet ist, vorzugsweise wobei der Bodenbearbeitungsbalken (48) einen zur Festlegung an einem Werkzeugträger (42) ausgebildeten Sockelbereich (50) und einen von dem Sockelbereich (50) bei an einem Werkzeugträger (42) angebrachtem Bodenbearbeitungswerkzeug (46) nach radial außen hervorstehenden Bodenbearbeitungsbereich (52) umfasst, weiter vorzugsweise wobei wenigstens ein Bodenbearbeitungswerkzeug (46) in seinem Sockelbereich (50) durch Verschraubung oder/und Verklemmung mit einem Werkzeugträger (42) verbunden oder verbindbar ist.

11. Bodenbearbeitungswalze nach einem der vorangehenden Ansprüche,
**dadurch gekennzeichnet, dass** wenigstens ein Bodenbearbeitungswerkzeug (46) eine mit wenigstens zwei Werkzeugträgern (42) verbundene oder verbindbare, die Trägerstruktur (11) radial außen in einem Umfangsbereich umgebend positionierte oder positionierbare Bodenbearbeitungsschale (66) umfasst, vorzugsweise wobei eine Mehrzahl von Bodenbearbeitungsschalen (66) in Umfangsrichtung aufeinanderfolgend jeweils in beiden Umfangsendbereichen mit einem Werkzeugträger (42) verbunden oder verbindbar ist, oder/und dass wenigstens eine Bodenbearbeitungsschale (66) mit den wenigstens zwei Werkzeugträgern (42) durch Verschraubung verbunden oder verbindbar ist.

12. Bodenbearbeitungswalze nach Anspruch 2 und Anspruch 11,
**dadurch gekennzeichnet, dass** wenigstens eine Bodenbearbeitungsschale (66) alle Trägerscheiben (12, 14, 16, 18, 20) radial außen in einem Umfangsbereich umgebend positioniert oder positionierbar ist.

13. Bodenbearbeitungswalze nach einem der Ansprüche 11 oder 12,
**dadurch gekennzeichnet, dass** an wenigstens einer Bodenbearbeitungsschale (66) wenigstens ein Walzenwerkzeug (78) getragen ist, oder/und dass wenigstens eine Bodenbearbeitungsschale mit gitterartiger Struktur ausgebildet ist, vorzugsweise wobei an jeder Bodenbearbeitungsschale (66) wenigstens ein Walzenwerkzeug (78) getragen ist, oder/und dass an wenigstens einer Bodenbearbeitungsschale (66) eine Mehrzahl von Walzenwerkzeugen (78) getragen ist, oder/und dass mit wenigstens einer Bodenbearbeitungsschale (66) wenigstens ein Wechselhalter (76) fest verbunden ist und mit dem wenigstens einen Wechselhalter (76) wenigstens ein Walzenwerkzeug (78) lösbar verbunden oder verbindbar ist, weiter vorzugsweise wobei wenigstens ein Walzenwerkzeug (78) einen Meißel (80) umfasst, oder/und dass wenigstens ein Walzenwerkzeug (78) einen Stampffuß umfasst.

14. Bodenbearbeitungswalze nach einem der Ansprüche 11-13,
**dadurch gekennzeichnet, dass** wenigstens eine Bodenbearbeitungsschale (66) in wenigstens einem Umfangsendbereich einen an eine konkave Kontur eines Werkzeugträgers (42) angepassten Werkzeugträger-Eingriffsbereich (68, 70) aufweist.

15. Bodenbearbeitungswalze nach einem der vorangehenden Ansprüche,
**dadurch gekennzeichnet,**
**dass** eine Mehrzahl von im Wesentlichen in Umfangsrichtung sich erstreckenden zweiten Bodenbearbeitungseinheiten (38) vorgesehen ist, und dass wenigstens eine zweite Bodenbearbeitungseinheit (38) an der Trägerstruktur (11) zwischen wenigstens zwei in Umfangsrichtung aufeinanderfolgenden ersten Bodenbearbeitungseinheiten (30) wenigstens einen nach radial außen hervorstehenden Bodenbearbeitungsvorsprung (40; 60, 62) umfasst.

16. Bodenbearbeitungswalze nach Anspruch 15,
**dadurch gekennzeichnet, dass** wenigstens eine zweite Bodenbearbeitungseinheit (38) an wenigstens einer Trägerscheibe (12, 14, 16, 18, 20) zwischen wenigstens zwei in Umfangsrichtung aufeinanderfolgenden ersten Bodenbearbeitungseinheiten (30) wenigstens einen nach radial außen hervorstehenden Bodenbearbeitungsvorsprung (40; 60, 62) umfasst, vorzugsweise wobei an jeder Trägerscheibe (12, 14, 16, 18, 20) wenigstens eine zweite Bodenbearbeitungseinheit (38) wenigstens einen Bodenbearbeitungsvorsprung (40; 62) umfasst oder/und bei wenigstens einer Trägerscheibe (12, 14, 16, 18, 20) zwischen wenigstens zwei in Umfangsrichtung aufeinanderfolgenden ersten Bodenbearbeitungseinheiten (30) keine zweite Bodenbearbeitungseinheit (38) vorgesehen ist.

17. Bodenbearbeitungswalze nach Anspruch 16,
**dadurch gekennzeichnet, dass** bei wenigstens einer Trägerscheibe (12, 14, 16, 18, 20) alternierend zwischen in Umfangsrichtung aufeinanderfolgenden ersten Bodenbearbeitungseinheiten (30) eine zweite Bodenbearbeitungseinheit (38) vorgesehen und keine zweite Bodenbearbeitungseinheit (38) vorgesehen ist, vorzugsweise wobei bei in Richtung der Walzendrehachse (A) aufeinanderfolgenden Trägerscheiben (12, 14, 16, 18, 20) zwischen in Umfangsrichtung aufeinanderfolgenden ersten Bodenbearbeitungseinheiten (30) an einer der Trägerscheiben (12, 14, 16, 18, 20) eine zweite Bodenbearbeitungseinheit (38) vorgesehen ist und an der anderen Trägerscheibe (12, 14, 16, 18, 20) keine zweite Bodenbearbeitungseinheit (38) vorgesehen ist.

18. Bodenbearbeitungswalze nach einem der Ansprüche 16 oder 17,
**dadurch gekennzeichnet,**
**dass** bei wenigstens einer zweiten Bodenbearbeitungseinheit (38) wenigstens ein Bodenbearbeitungsvorsprung (40) einen integralen Bestandteil einer Trägerscheibe (12, 14, 16, 18, 20) bildet,
oder/und
**dass** wenigstens eine zweite Bodenbearbeitungseinheit (38) wenigstens einen mit einer Trägerscheibe lösbar verbundenen oder verbindbaren Bodenbearbeitungsvorsprung-Träger (60) umfasst, vorzugsweise wobei wenigstens eine zweite Bodenbearbeitungseinheit (38) an einem Außenumfangsbereich einer Trägerscheibe (12, 14, 16, 18, 20) einen Bodenbearbeitungsvorsprung-Tragebereich (44) umfasst, und dass ein Bodenbearbeitungsvorsprung-Träger (60) in dem Bodenbearbeitungsvorsprung-Tragebereich (44) mit dieser Trägerscheibe (12, 14, 16, 18, 20) durch Verschraubung verbunden oder verbindbar ist.

19. Bodenbearbeitungswalze nach einem der Ansprüche 15-18,
**dadurch gekennzeichnet, dass** bei wenigstens einer zweiten Bodenbearbeitungseinheit (38) der wenigstens eine Bodenbearbeitungsvorsprung (40; 62) einen Umfangsabstand zu den diese zweite Bodenbearbeitungseinheit (38) in Umfangsrichtung zwischen sich aufnehmenden ersten Bodenbearbeitungseinheiten (30) aufweist.

20. Bodenbearbeitungsmaschine, umfassend wenigstens eine an einem Maschinenrahmen (90; 114) um die Walzendrehachse (A) drehbar getragene Bodenbearbeitungswalze (10) nach einem der vorangehenden Ansprüche.

21. Bodenbearbeitungsmaschine, nach Anspruch 20,
**dadurch gekennzeichnet, dass** die Bodenbearbeitungsmaschine (112) als Anhänge-Maschine ausgebildet ist und keinen Fahrantrieb aufweist, vorzugsweise wobei die Bodenbearbeitungsmaschine (112) zum Bereitstellen der Antriebsenergie für einen in der wenigstens einen Bodenbearbeitungswalze (10) vorgesehenen Schwingungserzeugungsmechanismus (98) mit einer Antriebsmaschine (124) hydraulisch oder/und mechanisch zu koppeln ist oder an der Bodenbearbeitungsmaschine (112) ein Antriebsaggregat (126) zum Bereitstellen der Antriebsenergie für einen in der wenigstens einen Bodenbearbeitungswalze (10) vorgesehenen Schwingungserzeugungsmechanismus (98) vorgesehen ist.

22. Bodenbearbeitungsmaschine, nach Anspruch 20,
**dadurch gekennzeichnet, dass** die Bodenbearbeitungsmaschine (92) selbstfahrend ist und einen Fahrantrieb aufweist, vorzugsweise wobei ein Antriebsaggregat (110) des Fahrantriebs zum Bereitstellen der Antriebsenergie für einen in der wenigstens einen Bodenbearbeitungswalze (10) vorgesehenen Schwingungserzeugungsmechanismus (98) vorgesehen ist, oder dass an der Bodenbearbeitungsmaschine (80) ein Antriebsaggregat (110) für den Fahrantrieb und ein von dem Antriebsaggregat für den Fahrantrieb getrennt ausgebildetes Antriebsaggregat für den Schwingungserzeugungsmechanismus (98) der wenigstens einen Bodenbearbeitungswalze (10) vorgesehen ist.

## Claims

1. A soil processing roller comprising a support structure (11), wherein to form a roller body (36) rotatable about a roller axis of rotation (A) on a radially outer region of the support structure (11), a plurality of first soil processing units (30) is provided extending substantially in the direction of the roller axis of rotation (A), wherein the support structure (11) comprises a plurality of support disks (12, 14, 16, 18, 20) arranged consecutively in the direction of a roller axis of rotation (A) and connected to one another to form a roller body (36), wherein the plurality of first soil processing units (30) extending substantially in the direction of roller axis of rotation (A) is provided on an outer circumferential region of at least one part of the support disks (12, 14, 16, 18, 20), wherein at least one first soil processing unit (30) comprises a tool carrier (42) having a concave contour with respect to the outer circumference of the roller body (36) and wherein a soil processing tool (46) is detachably connected or connectable to at least one tool carrier (42),
**characterized in that**
the at least one tool carrier (42) is formed basin-like and is fixedly connected to at least one part of the support disks (12, 14, 16, 18, 20) by welding.

2. The soil processing roller according to claim 1,
**characterized in that** the roller body (36) is designed as substantially open radially outward in its outer circumferential region,
or/and
that a plurality of second soil processing units (38) extending substantially in the circumferential direction is provided on an outer circumferential region of at least one part of the support disks (12, 14, 16, 18, 20), preferably wherein at least part of the support disks (12, 14, 16, 18, 20) is designed with a substantially circular outer circumferential contour,
or/and that at least part of the support disks (14) comprises a plurality of support disk segments (14a, 14b, 14c, 14d, 14e) arranged spaced circumferentially apart from one another.

3. The soil processing roller according to one of the preceding claims,
**characterized in that**
the support structure (11) comprises a plurality of support struts (35) supporting second soil processing units (38) extending substantially in the circumferential direction,
or/and
that the support structure (11) is arranged surrounding a circumferential wall (22) of a housing (24) for a vibration generating mechanism (98) or/and is connected to the circumferential wall (22).

4. The soil processing roller according to claim 3,
**characterized in that** at least one part of the support disks (12, 14, 16, 18, 20) is arranged surrounding the circumferential wall (22) of the housing (24), wherein the support disks (14, 16, 18) arranged surrounding the circumferential wall (22) are fixedly connected to the circumferential wall (22), or/and that in at least one axial end region of roller body (36), at least one support disk (12, 20) is connected to the support disks (14, 16, 18) arranged surrounding the circumferential wall (22) by at least one part of the first soil processing units (30), or/and that the support disks (14, 16, 18) arranged surrounding the circumferential wall (22) are fixedly connected to the circumferential wall (22) by welding.

5. The soil processing roller according to claim 3 or 4,
**characterized in that** a vibration generating mechanism (98) with at least one unbalanced mass (100, 102) rotatable about an unbalanced axis of rotation (U) is arranged in the housing (24), or/and that the housing (24) is closed by an end wall (26, 28) in at least one axial end region, preferably wherein the unbalanced axis of rotation (U) substantially corresponds to roller axis of rotation (A), or/and that an unbalanced drive motor (106) assigned to the at least one unbalanced mass (100, 102) is arranged on an end wall.

6. The soil processing roller according to one of the preceding claims,
**characterized in that** at least one first soil processing unit (30) comprises a soil processing bar (32) fixedly connected to the support structure (11), preferably wherein a plurality of soil processing bars (32) is arranged spaced circumferentially apart from one another.

7. The soil processing roller according to claim 2 and claim 6,
**characterized in that** the at least one soil processing bar (32) is fixedly connected to all support disks (12, 14, 16, 18, 20) or/and that the at least one soil processing bar (32) is fixedly connected to at least a part of the support disks (12, 14, 16, 18, 20) by welding.

8. The soil processing roller according to one of the preceding claims,
**characterized in that** each first soil processing unit (30) comprises a tool carrier (42) or/and that a plurality of tool carriers (42) is arranged spaced circumferentially apart from one another.

9. The soil processing roller according to one of claims 1-8,
**characterized in that** the at least one tool carrier (42) is fixedly connected to each support disk (12, 14, 16, 18, 20).

10. The soil processing roller according to one of the preceding claims,
**characterized in that** at least one soil processing tool (46) is designed as a soil processing bar (48), preferably wherein the soil processing bar (48) comprises a socket region (50) designed for securing on a tool carrier (42) and a soil processing region (52) projecting radially outward from the socket region (50) for a soil processing tool (46) mounted on a tool carrier (42), furthermore preferably wherein at least one soil processing tool (46) is connected or connectable in its socket region (50) by screwing or/and clamping to a tool carrier (42).

11. The soil processing roller according to one of the preceding claims,
**characterized in that** at least one soil processing tool (46) comprises a soil processing shell (66) positioned or positionable surrounding the support structure (11) radially outwardly, and connected or connectable to at least two tool carriers (42),preferably wherein a plurality of soil processing shells (66) consecutively following one another in the circumferential direction is connected or connectable to a tool carrier (42) in both circumferential end regions respectively, or/and that at least one soil processing shell (66) is connected or connectable to the at least two tool carriers (42) by screwing.

12. The soil processing roller according to claim 2 and claim 11,
**characterized in that** at least one soil processing shell (66) is positioned or positionable surrounding all support disks (12, 14, 16, 18, 20) radially outwardly in a circumferential region.

13. The soil processing roller according to one of claims 11 or 12,
**characterized in that** at least one roller tool (78) is mounted on at least one soil processing shell (66), or/and that at least one soil processing shell is designed with a grid-like structure, preferably wherein at least one roller tool (78) is mounted on each soil processing shell (66), or/and that a plurality of roller tools (78) is mounted on at least one soil processing shell (66), or/and that at least one interchangeable holder (76) is fixedly connected to at least one soil processing shell (66) and at least one roller tool (78) is detachably connected or connectable to the at least one interchangeable holder (76), furthermore preferably wherein at least one roller tool (78) comprises a chisel (80), or/and that at least one roller tool (78) comprises a tamping foot.

14. The soil processing roller according to one of claims 11-13,
**characterized in that** at least one soil processing shell (66) has in at least one circumferential end region a tool carrier engagement region (68, 70) adapted to a concave contour of a tool carrier (42).

15. The soil processing roller according to one of the preceding claims,
**characterized in that**
a plurality of second soil processing units (38) is provided extending in the circumferential direction and **in that** at least one second soil processing unit (38) comprises at least one soil processing projection (40; 60, 62) projecting radially outward on the support structure (11) between at least two first soil processing units (30) consecutively following one another in the circumferential direction.

16. The soil processing roller according to claim 15,
**characterized in that** at least one second soil processing unit (38) comprises at least one soil processing projection (40; 60, 62) projecting radially outward on at least one support disk (12, 14, 16, 18, 20) between at least two first soil processing units (30) consecutively following one another in the circumferential direction, preferably wherein at least one second soil processing unit (38) comprises at least one soil processing projection (40; 62) on each support disk (12, 14, 16, 18, 20) or/and for at least one support disk (12, 14, 16, 18, 20), no second soil processing unit (38) is provided between at least two first soil processing units (30) consecutively following one another in the circumferential direction.

17. The soil processing roller according to claim 16,
**characterized in that,** for at least one support disk (12, 14, 16, 18, 20), one second soil processing unit (38) is provided and no second soil processing unit (38) is provided in alternation between first soil processing units (30) consecutively following one another in the circumferential direction, preferably wherein for support disks (12, 14, 16, 18, 20) consecutively following one another in the direction of the roller axis of rotation (A), one second soil processing unit (38) is provided between first soil processing units (30) consecutively following one another in the circumferential direction on one of support disks (12, 14, 16, 18, 20) and no second soil processing unit (38) is provided on the other support disk (12, 14, 16, 18, 20).

18. The soil processing roller according to one of claims 16 or 17,
**characterized in that,**
for at least one second soil processing unit (38), at least one soil processing projection (40) forms an integral component of a support disk (12, 14, 16, 18, 20),
or/and
that at least one second soil processing unit (38) comprises at least one soil processing projection carrier (60) detachably connected or connectable to a support disk, preferably wherein at least one second soil processing unit (38) comprises a soil processing projection support portion (44) on an outer circumferential region of a support disk (12, 14, 16, 18, 20), and that a soil processing projection carrier (60) is connected or connectable to said support disk (12, 14, 16, 18, 20) in the soil processing projection support portion (44) by screwing.

19. The soil processing roller according to one of claims 15-18,
**characterized in that** for at least one second soil processing unit (38), the at least one soil processing projection (40; 62) has a circumferential spacing to the first soil processing units (30) accommodating said second soil processing unit (38) between themselves in the circumferential direction.

20. A soil processing machine, comprising at least one soil processing roller (10) according to one of the preceding claims mounted on a machine frame (90; 114) to be rotatable about the roller axis of rotation (A).

21. The soil processing machine according to claim 20,
**characterized in that** the soil processing machine (112) is designed as a trailer machine and does not have a traction drive, preferably wherein the soil processing machine (112) is to be hydraulically or/and mechanically coupled to a drive engine (124) to provide the drive energy for a vibration generating mechanism (98) provided in the at least one soil processing roller (10) or/and a drive unit (126) is provided on the soil processing machine (112) to provide the drive energy for a vibration generating mechanism (98) provided in the at least one soil processing roller (10).

22. The soil processing machine according to claim 20,
**characterized in that** the soil processing machine (92) is self-propelled and has a traction drive, preferably wherein a drive unit (110) of the traction drive is provided to provide the drive energy for a vibration generating mechanism (98) provided in the at least one soil processing roller (10), or that a drive unit (110) is provided on the soil processing machine (80) for the traction drive and a drive unit, designed separately from the drive unit for traction drive, is provided for the vibration generating mechanism (98) of the at least one soil processing roller (10).

## Revendications

1. Rouleau de traitement du sol comprenant une structure de support (11), dans lequel, pour former un corps de rouleau (36) pouvant tourner autour d'un axe de rotation du rouleau (A) sur une région radialement extérieure de la structure de support (11), une pluralité de premières unités de traitement du sol (30) est prévue, s'étendant sensiblement dans la direction de l'axe de rotation du rouleau (A), dans lequel la structure de support (11) comprend une pluralité de disques de support (12, 14, 16, 18, 20) disposés consécutivement dans la direction d'un axe de rotation du rouleau (A) et connectés les uns aux autres pour former un corps de rouleau (36), dans lequel la pluralité de premières unités de traitement du sol (30) s'étendant sensiblement dans la direction de l'axe de rotation du rouleau (A) est prévue sur une région circonférentielle extérieure d'au moins une partie des disques de support (12, 14, 16, 18, 20), dans lequel au moins une première unité de traitement du sol (30) comprend un porte-outil (42) ayant un contour concave par rapport à la circonférence extérieure du corps de rouleau (36) et dans lequel un outil de traitement du sol (46) est connecté ou peut être connecté de manière détachable à au moins un porte-outil (42),
**caractérisé en ce que**
ledit au moins un porte-outil (42) est formé en forme de cuvette et est connecté de manière fixe à au moins une partie des disques de support (12, 14, 16, 18, 20) par soudage.

2. Rouleau de traitement du sol selon la revendication 1,
**caractérisé en ce que** le corps de rouleau (36) est conçu comme étant sensiblement ouvert radialement vers l'extérieur dans sa région circonférentielle extérieure,
ou/et
qu'une pluralité de deuxièmes unités de traitement du sol (38) s'étendant sensiblement dans la direction circonférentielle est prévue sur une région circonférentielle extérieure d'au moins une partie des disques de support (12, 14, 16, 18, 20), de préférence dans lequel au moins une partie des disques de support (12, 14, 16, 18, 20) est conçue avec un contour circonférentiel extérieur sensiblement circulaire,
ou/et qu'au moins une partie des disques de support (14) comprend une pluralité de segments de disques de support (14a, 14b, 14c, 14d, 14e) disposés à distance les uns des autres dans le sens de la circonférence.

3. Rouleau de traitement du sol selon l'une des revendications précédentes,
**caractérisé en ce que**
la structure de support (11) comprend une pluralité d'entretoises de support (35) supportant des deuxièmes unités de traitement du sol (38) s'étendant sensiblement dans la direction circonférentielle,
ou/et
que la structure de support (11) est disposée autour d'une paroi circonférentielle (22) d'un boîtier (24) pour un mécanisme générateur de vibrations (98) ou/et est connectée à la paroi circonférentielle (22).

4. Rouleau de traitement du sol selon la revendication 3,
**caractérisé en ce qu'**au moins une partie des disques de support (12, 14, 16, 18, 20) est disposée autour de la paroi circonférentielle (22) du boîtier (24), dans lequel les disques de support (14, 16, 18) disposés autour de la paroi circonférentielle (22) sont connectés de manière fixe à la paroi circonférentielle (22), ou/et **en ce que** dans au moins une région d'extrémité axiale du corps de rouleau (36), au moins un disque de support (12, 20) est connecté aux disques de support (14, 16, 18) disposés autour de la paroi circonférentielle (22) par au moins une partie des premières unités de traitement du sol (30), ou/et que les disques de support (14, 16, 18) disposés autour de la paroi circonférentielle (22) sont connectés fixement à la paroi circonférentielle (22) par soudage.

5. Rouleau de traitement du sol selon la revendication 3 ou 4,
**caractérisé en ce qu'**un mécanisme générateur de vibrations (98) avec au moins une masse de balourd (100, 102) pouvant tourner autour d'un axe de rotation de balourd (U) est disposé dans le boîtier (24), ou/et **en ce que** le boîtier (24) est fermé par une paroi frontale (26, 28) dans au moins une zone d'extrémité axiale, de préférence dans lequel l'axe de rotation de balourd (U) correspond essentiellement à l'axe de rotation du rouleau (A), ou/et **en ce qu'**un moteur d'entraînement de balourd (106) associé à ladite au moins une masse de balourd (100, 102) est disposé sur une paroi frontale.

6. Rouleau de traitement du sol selon l'une des revendications précédentes,
**caractérisé en ce qu'**au moins une première unité de traitement du sol (30) comprend une barre de traitement du sol (32) connectée de manière fixe à la structure de support (11), de préférence dans lequel une pluralité de barres de traitement du sol (32) sont disposées à distance circonférentielle les unes des autres.

7. Rouleau de traitement du sol selon la revendication 2 et la revendication 6,
**caractérisé en ce que** ledit au moins une barre de traitement du sol (32) est connectée de manière fixe à tous les disques de support (12, 14, 16, 18, 20) ou/et que ledit au moins une barre de traitement du sol (32) est connectée de manière fixe à au moins une partie des disques de support (12, 14, 16, 18, 20) par soudage.

8. Rouleau de traitement du sol selon l'une des revendications précédentes,
**caractérisé en ce que** chaque première unité de traitement du sol (30) comprend un porte-outil (42) ou/et qu'une pluralité de porte-outils (42) est disposée à distance circonférentielle les uns des autres.

9. Rouleau de traitement du sol selon l'une des revendications 1 à 8,
**caractérisé en ce que** ledit au moins un porte-outil (42) est connecté de manière fixe à chaque disque de support (12, 14, 16, 18, 20).

10. Rouleau de traitement du sol selon l'une des revendications précédentes,
**caractérisé en ce qu'**au moins un outil de traitement du sol (46) est réalisé comme barre de traitement du sol (48), de préférence dans lequel la barre de traitement du sol (48) comprend une zone de socle (50) réalisée pour la fixation sur un porte-outil (42) et une zone de traitement du sol (52) faisant saillie radialement vers l'extérieur depuis la zone de socle (50) pour un outil de traitement du sol (46) monté sur un porte-outil (42), de préférence en outre dans lequel au moins un outil de traitement du sol (46) est connecté ou peut être connecté dans sa zone de socle (50) par vissage ou/et serrage à un porte-outil (42).

11. Rouleau de traitement du sol selon l'une des revendications précédentes,
**caractérisé en ce qu'**au moins un outil de traitement du sol (46) comprend une coque de traitement du sol (66) positionnée ou positionnable entourant la structure de support (11) radialement vers l'extérieur, et connectée ou connectable à au moins deux porte-outils (42), de préférence dans lequel une pluralité de coques de traitement du sol (66) se suivant consécutivement dans la direction circonférentielle est connectée ou connectable à un porte-outil (42) dans les deux régions d'extrémité circonférentielles respectivement, ou/et qu'au moins une coque de traitement du sol (66) est connectée ou connectable auxdits au moins deux porte-outils (42) par vissage.

12. Rouleau de traitement du sol selon la revendication 2 et la revendication 11,
**caractérisé en ce qu'**au moins une coque de traitement du sol (66) est positionnée ou positionnable entourant tous les disques de support (12, 14, 16, 18, 20) radialement vers l'extérieur dans une région circonférentielle.

13. Rouleau de traitement du sol selon l'une des revendications 11 ou 12,
**caractérisé en ce qu'**au moins un outil de rouleau (78) est monté sur au moins une coque de traitement du sol (66), ou/et qu'au moins une coque de traitement du sol est conçue avec une structure en forme de grille, de préférence dans lequel au moins un outil de rouleau (78) est monté sur chaque coque de traitement du sol (66), ou/et qu'une pluralité d'outils de rouleau (78) est montée sur au moins une coque de traitement du sol (66), ou/et qu'au moins un support interchangeable (76) est connecté de manière fixe à au moins une coque de traitement du sol (66) et qu'au moins un outil de rouleau (78) est connecté de manière amovible ou peut être connecté audit au moins un support interchangeable (76), de préférence en outre dans lequel au moins un outil de rouleau (78) comprend un ciseau (80), ou/et qu'au moins un outil de rouleau (78) comprend un pied de bourrage.

14. Rouleau de traitement du sol selon l'une des revendications 11-13,
**caractérisé en ce qu'**au moins une coque de traitement du sol (66) présente dans au moins une zone d'extrémité circonférentielle une zone d'engagement de porte-outil (68, 70) adaptée à un contour concave d'un porte-outil (42).

15. Rouleau de traitement du sol selon l'une des revendications précédentes,
**caractérisé en ce que**
il est prévu une pluralité de deuxièmes unités de traitement du sol (38) s'étendant essentiellement dans la direction circonférentielle et **en ce qu'**au moins une deuxième unité de traitement du sol (38) comprend au moins une saillie de traitement du sol (40 ; 60, 62) faisant saillie radialement vers l'extérieur sur la structure de support (11) entre au moins deux premières unités de traitement du sol (30) se succédant dans la direction circonférentielle.

16. Rouleau de traitement du sol selon la revendication 15,
**caractérisé en ce qu'**au moins une deuxième unité de traitement du sol (38) comprend au moins une saillie de traitement du sol (40 ; 60, 62) faisant saillie radialement vers l'extérieur sur au moins un disque de support (12, 14, 16, 18, 20) entre au moins deux premières unités de traitement du sol (30) se suivant consécutivement dans la direction circonférentielle, de préférence dans lequel au moins une deuxième unité de traitement du sol (38) comprend au moins une saillie de traitement du sol (40 ; 62) sur chaque disque de support (12, 14, 16, 18, 20) ou/et pour au moins un disque de support (12, 14, 16, 18, 20), aucune deuxième unité de traitement du sol (38) n'est prévue entre au moins deux premières unités de traitement du sol (30) se suivant consécutivement dans la direction circonférentielle.

17. Rouleau de traitement du sol selon la revendication 16,
**caractérisé en ce que,** pour au moins un disque de support (12, 14, 16, 18, 20), une deuxième unité de traitement du sol (38) est prévue et aucune deuxième unité de traitement du sol (38) n'est prévue en alternance entre des premières unités de traitement du sol (30) se succédant dans la direction circonférentielle, de préférence dans lequel pour les disques de support (12, 14, 16, 18, 20) se suivant consécutivement dans la direction de l'axe de rotation du rouleau (A), une deuxième unité de traitement du sol (38) est prévue entre des premières unités de traitement du sol (30) se suivant consécutivement dans la direction circonférentielle sur l'un des disques de support (12, 14, 16, 18, 20) et aucune deuxième unité de traitement du sol (38) n'est prévue sur l'autre disque de support (12, 14, 16, 18, 20).

18. Rouleau de traitement du sol selon l'une des revendications 16 ou 17,
**caractérisé en ce que,**
pour au moins une deuxième unité de traitement du sol (38), au moins une saillie de traitement du sol (40) forme un composant intégral d'un disque de support (12, 14, 16, 18, 20),
ou/et
qu'au moins une deuxième unité de traitement du sol (38) comprend au moins un support de projection de traitement du sol (60) connecté ou connectable de manière détachable à un disque de support, de préférence dans lequel au moins une deuxième unité de traitement du sol (38) comprend une partie de support de projection de traitement du sol (44) sur une région circonférentielle extérieure d'un disque de support (12, 14, 16, 18, 20), et qu'un support de projection de traitement du sol (60) est connecté ou connectable audit disque de support (12, 14, 16, 18, 20) dans la partie de support de projection de traitement du sol (44) par vissage.

19. Rouleau de traitement du sol selon l'une des revendications 15 à 18,
**caractérisé en ce que** pour au moins une deuxième unité de traitement du sol (38), ladite au moins une saillie de traitement du sol (40 ; 62) présente un espacement circonférentiel par rapport aux premières unités de traitement du sol (30) recevant la deuxième unité de traitement du sol (38) entre elles dans la direction circonférentielle.

20. Machine de traitement du sol, comprenant au moins un rouleau de traitement du sol (10) selon l'une des revendications précédentes monté sur un châssis de machine (90 ; 114) pour pouvoir tourner autour de l'axe de rotation du rouleau (A).

21. Machine de traitement du sol selon la revendication 20,
**caractérisée en ce que** la machine de traitement du sol (112) est conçue comme une machine remorquée et ne possède pas d'entraînement de marche, de préférence dans lequel la machine de traitement du sol (112) doit être couplée hydrauliquement ou/et mécaniquement à un moteur d'entraînement (124) pour fournir l'énergie d'entraînement pour un mécanisme de génération de vibrations (98) prévu dans ledit au moins un rouleau de traitement du sol (10) ou/et une unité d'entraînement (126) est prévue sur la machine de traitement du sol (112) pour fournir l'énergie d'entraînement pour un mécanisme de génération de vibrations (98) prévu dans ledit au moins un rouleau de traitement du sol (10).

22. Machine de traitement du sol selon la revendication 20,
**caractérisée en ce que** la machine de traitement du sol (92) est automotrice et présente un entraînement de marche, de préférence dans lequel une unité d'entraînement (110) de l'entraînement de marche est prévue pour fournir l'énergie d'entraînement à un mécanisme de génération de vibrations (98) prévu dans ledit au moins un rouleau de traitement du sol (10), ou **en ce qu'**une unité d'entraînement (110) est prévue sur la machine de traitement du sol (80) pour l'entraînement de marche et une unité d'entraînement, conçue séparément de l'unité d'entraînement pour l'entraînement de marche, est prévue pour le mécanisme de génération de vibrations (98) dudit au moins un rouleau de traitement du sol (10).
